# EUROPÄISCHE PATENTSCHRIFT

(11) **EP 2 671 382 B1**
(45) Veröffentlichungstag und Bekanntmachung des Hinweises auf die Patenterteilung: **08.11.2017**
(21) Anmeldenummer: 12701359.7
(22) Anmeldetag: 31.01.2012
(51) Int. Cl.: H04N 9/804, H04L 29/06

(54) **VIDEOAUFNAHMESYSTEM UND VERFAHREN ZUR VIDEOAUFNAHME**
VIDEO RECORDING SYSTEM AND METHOD FOR VIDEO RECORDING
SYSTÈME D'ENREGISTREMENT VIDÉO ET PROCÉDÉ D'ENREGISTREMENT VIDÉO

(30) Priorität: 31.01.2011 DE 102011003392
(43) Veröffentlichungstag der Anmeldung: 11.12.2013
(73) Patentinhaber: Fraunhofer-Gesellschaft zur Förderung der angewandten Forschung e.V., 80686 München (DE)
(72) Erfinder: SPARENBERG, Heiko, 90425 Nürnberg (DE); SCHOEBERL, Michael, 91058 Erlangen (DE); NOWAK, Arne, 91054 Erlangen (DE); FOESSEL, Siegfried, 91054 Erlangen (DE)
(74) Vertreter: Schenk, Markus
(86) Internationale Anmeldenummer: PCT/EP2012/051525
(87) Internationale Veröffentlichungsnummer: WO 2012/104284

(56) Entgegenhaltungen:
- EP-A1- 1 775 946
- WO-A1-2009/131286
- DE-A1- 19 744 294
- US-B2- 7 724 964

## Beschreibung

### Technisches Gebiet

Ausführungsbeispiele der vorliegenden Erfindung schaffen ein Videoaufnahmesystem und ein Verfahren zur Videoaufnahme, wie sie beispielsweise in der Medienproduktion oder im Bereich der Raum- und Objektüberwachung Anwendung finden können.

### Hintergrund der Erfindung

Bei der Aufnahme von Videosequenzen entsteht eine große Datenmenge. In einem typischen Produktionsszenario werden jedoch nicht alle Daten gleichzeitig und in hoher Qualität benötigt. Häufig gehen nur eine oder wenige Kameras gleichzeitig "auf Sendung".

Es entstehen hohe Kosten, da eine spezielle Infrastruktur für eine unkomprimierte Übertragung mit hochwertigen Kabeln aufgebaut werden muss. Die Datenrate aller Kameras summiert sich zu vielen GBit/s, die alle gleichzeitig verarbeitet werden müssen.

Zu einem bestimmten Zeitpunkt wird nur ein geringer Teil der Daten tatsächlich verwendet und an die Zuschauer vor dem Bildschirm gesendet. Die Bilder anderer Quellen würden zu diesem Zeitpunkt nur in Vorschau-Qualität benötigt und eine vollständige Übertragung in Sendequalität führt zu einem sehr hohen Datenaufkommen.

Bei der Kameraüberwachung von Räumen und Orten werden eine Vielzahl von Kameras eingesetzt, deren Bildsignale in eine Überwachungszentrale zur Darstellung auf Monitorwänden und zur Aufzeichnung übertragen werden. Die Überwachungszentrale kann sich dabei in großem Abstand zu den Montageorten der einzelnen Kameras befinden. Die Kameras liefern jeweils ein zweidimensionales Bild aus einem durch die Montageorte und die verwendeten Objektive festgelegten Blickwinkel. Weiterhin können die Kameras auf fernsteuerbaren Schwenk-/Neigeköpfen angebracht sein. Außerdem kann die Brennweite ferngesteuert verändert werden. Diese Veränderungen erfolgen in der Regel manuell durch einen Bediener.

Beim Einsatz in der Raum- und Objektüberwachung kann immer nur das Bildsignal aufgenommen werden, das in der Überwachungszentrale zur Verfügung steht. Aufgrund der in diesem Einsatzgebiet verwendeten geringen durchschnittlichen Übertragungsrate pro Kamera, ist die Bildqualität (Auflösung, Bildwiederholrate, Schärfe, Freiheit von Kompressionsartefakten) stark reduziert. Ist die nachträgliche Analyse eines Ereignisses notwendig, kann nur auf diese geringe Qualität zurückgegriffen werden. Es steht nur der Bildausschnitt (und damit nur der Teil des überwachten Raums) für eine Auswertung zur Verfügung, der zum Zeitpunkt der Aufnahme eingestellt war.

Die Schriften US 2007296817 A, JP 2004304418, DE 10301457, JP 2002118822, JP 2004088481, JP 2005286770, US 4807724, JP 6104766, US 6697568 sowie die Veröffentlichung K. Quast, A. Kaup: "Spatial Scalable JPEG2000 Transcoding and Tracking of Regions of Interest for Video Surveillance", 13th International Fall Workshop Vision, Modeling, an Visualization (VMV), Seiten 111 - 120, Konstanz, Deutschland, Oktober 2008, zeigen verschiedene Konzepte zur Videoaufnahme.

Die Patentschriften EP 1 775 946, US 7,724,964, WO 2009/131286 bechäftigen sich ebenfalls mit skalierbaren Datenströmen, wobei dieser Datenstrom vor Übertragung zwischengespeichert wird. Entsprechend der Lehre dieser drei Patentschriften erfolgt aber nicht eine Speicherplatz-optimierte Einlagerung.

Die DE 197 44 294 bezieht sich auf ein Verfahren zum Überwachen eines Zielbereichs von einem entfernten Standort aus, bei dem zunächst eine Sequenz von aufeinanderfolgenden Einzelbildern des Zielbereichs aufgezeichnet wird und dann als erste Anzahl von Einzelbildern und zweite Anzahl von Einzelbildern übertragen wird.

### Zusammenfassung der Erfindung

Es ist eine Aufgabe der vorliegenden Erfindung, ein Konzept zu schaffen, welches einen besseren Kompromiss zwischen Bildqualität einer Videoaufnahme und Vernetzungsaufwand zur Übertragung dieser Videoaufnahme schafft.

Diese Aufgabe wird gelöst durch ein Videoaufnahmesystem gemäß Anspruch 1 und ein Verfahren gemäß Anspruch 14.

Ausführungsbeispiele der vorliegenden Erfindung schaffen ein Videoaufnahmesystem mit einem Erfasser zum Erfassen einer Videosequenz, einem Speicher und einem Komprimierer.

Der Komprimierer ist ausgebildet, um eine Videokomprimierung an der Videosequenz durchzuführen, um einen skalierbaren Datenstrom zu erhalten, der die Videosequenz repräsentiert. Weiterhin ist der Komprimierer ausgebildet, um den skalierbaren Datenstrom ungekürzt in dem Speicher abzulegen und um eine Echtzeitausgabe des skalierbaren Datenstroms in einer herunterskalierten Version durchzuführen. Weiterhin weist das Videoaufnahmesystem eine Netzwerkschnittstelle auf, über die der gespeicherte skalierbare Datenstrom abrufbar ist.

Es ist ein Kerngedanke der vorliegenden Erfindung, dass ein verbesserter Kompromiss zwischen Bildqualität einer Videoaufnahme und Vernetzungsaufwand für eine Übertragung der Videoaufnahme geschaffen werden kann, wenn die Videoaufnahme in einen skalierbaren Datenstrom überführt und eine Echtzeitausgabe des skalierbaren Datenstroms in einer herunterskalierten Version erfolgt oder so, dass die Echtzeitausgabe des skalierbaren Datenstroms für die herunterskalierte Version mit einer höheren Priorisierung erfolgt als für einen zu einer ungekürzten Version des skalierbaren Datenstroms fehlenden Teils des skalierbaren Datenstroms, so dass wenigstens die Echtzeitausgabe in der herunterskalierten Version sichergestellt ist, und der skalierbaren Datenstroms in einem Speicher in einer gegenüber der herunterskalierten Version weniger herunterskalierten Version abgelegt wird, um später abrufbar zu sein. Gemäß einem Ausführungsbeispiel wird die Videoaufnahme in einen skalierbaren Datenstrom überführt und dieser Datenstrom ungekürzt in einem Speicher des Videoaufnahmesystems abgespeichert, um über eine Netzwerkschnittstelle abrufbar zu sein, wobei aber weiterhin auch eine Ausgabe einer herunterskalierten Version in Echtzeit erfolgt. Durch die Speicherung des skalierbaren Datenstroms ungekürzt oder höherem Skalierungsniveau in dem Speicher des Videoaufnahmesystems wird ermöglicht, dass dieser Datenstrom auch nach der Erfassung der Videosequenz (also beispielsweise nach der Aufnahme der Videosequenz durch eine Kamera) in maximaler Qualität bzw. maximalem Informationsgehalt zur Verfügung steht und über die Netzwerkschnittstelle abgerufen werden kann.

So wird beispielsweise ermöglicht, dass die Videosequenz bei der Echtzeitausgabe in einer niedrigeren Qualität (in Form der herunterskalierten Version des skalierbaren Datenstroms) bereitgestellt wird (sogenannter Livestream) und dass bei Bedarf relevante Stellen der Videosequenz aus dem Speicher nachträglich abgerufen werden können. So wird beispielsweise ermöglicht, dass die Echtzeitausgabe zur Darstellung der Videosequenz auf einem Vorschaumonitor dient, auf dem typischerweise eine geringere Bildqualität als für die Weiterverarbeitung der Videosequenz (beispielsweise im Videoschnitt) benötigt wird. Bei Erkennen einer relevanten Situation in der Videosequenz über den Vorschaumonitor kann dann der relevante Abschnitt der Videosequenz aus dem Speicher des Videoaufnahmesystems in hoher Qualität (beispielsweise als ungekürzter oder nur geringfügig gekürzter Datenstrom) abgerufen werden und entsprechend weiterverarbeitet werden. Durch die Verwendung einer Videokomprimierung, bei der ein skalierbarer Datenstrom erhalten wird, lässt sich das Herunterskalieren des Datenstroms vor der Echtzeitausgabe besonders einfach durchführen, ohne dass ein erneutes Codieren der Videosequenz nötig ist, indem der Datenstrom an ausgewählten Stellen einfach gekürzt wird (beispielsweise um die Auflösung einzelner Bilder der Videosequenz zu reduzieren).

Mit anderen Worten erlauben skalierbare Bilddaten (bzw. erlaubt ein skalierbarer Datenstrom) das Decodieren eines Subbildes (z. B. mit einer geringeren Auflösung oder niedrigeren Qualität), indem lediglich ein kleiner Teil aus dem kompletten Datenstrom gelesen und verarbeitet wird, so dass keine Transcoding-Schritte nötig sind, um eine neue Repräsentation von einem Bild zu bekommen.

Es ist ein Vorteil von Ausführungsbeispielen der vorliegenden Erfindung, dass durch das Ablegen des skalierbaren Datenstroms ungekürzt in dem Speicher die erfasste Videosequenz in einer hohen Qualität in dem Speicher vorliegt, sie aber aufgrund der Verwendung einer Videokomprimierung, die einen skalierbaren Datenstrom generiert, einfach in der Qualität/Auflösung herunterskalierbar bzw. reduzierbar ist, so dass bei einer Echtzeitausgabe der Videosequenz die Qualität der Videosequenz einfach durch Herunterskalieren (beispielsweise Kürzen) des die Videosequenz repräsentierenden Datenstroms reduziert werden kann, so dass die Videosequenz für die Echtzeitausgabe nicht in der höchsten Qualität, in der sie im Speicher vorliegt (und damit die maximale Speichergröße einnimmt), übertragen werden muss. Dadurch lässt sich insbesondere bei einer Verwendung einer Vielzahl von Videoaufnahmesystemen, welche an ein Netzwerk angeschlossen sind und bei denen typischerweise nur eine Echtzeitausgabe in hoher Qualität benötigt wird, während andere Videoaufnahmesysteme eine Echtzeitausgabe in niedriger Qualität liefern können, ein Vernetzungsaufwand für die Videoaufnahmesysteme verringert, da nicht mehr jedes einzelne Videoaufnahmesystem gleichzeitig mit allen anderen Videoaufnahmesystemen eine dedizierte Hochgeschwindigkeitsübertragungsstrecke benötigt, sondern solch eine Hochgeschwindigkeitsübertragungsstrecke nur für das Videoaufnahmesystem bereitgestellt wird, welches gerade eine Echtzeitübertragung mit hoher Qualität liefert, während die anderen Videoaufnahmesysteme, welche zwar auch eine Echtzeitausgabe liefern können (aber in einer deutlich niedrigeren Qualität) deutlich weniger Bandbreite zur Übertragung der herunterskalierten Datenströme, die ihre jeweiligen erfassten Videosequenzen repräsentieren, benötigen.

Ausführungsbeispiele ermöglichen damit ein Übertragen des skalierbaren Datenstroms in einer ungekürzten Version (und damit in einer maximalen Qualität der Videosequenz), nur wenn dieser auch benötigt wird und weiterhin, aufgrund der Speicherung des skalierbaren Datenstroms ungekürzt in dem Speicher, ein späteres Abrufen des Datenstroms in einer beliebig gekürzten Version (und damit in einer beliebigen Qualität), obwohl er während der Echtzeitausgabe in der herunterskalierten Version ausgegeben wurde.

Als Verfahren zur Videokomprimierung in dem Komprimierer kann beispielsweise JPEG2000 oder ein hybride Videokomprimierung (wie beispielsweise H.264 SVC) verwendet werden, die einen skalierbaren Datenstrom generieren.

Gemäß einigen Ausführungsbeispielen kann der Komprimierer ausgebildet sein, um bei der Durchführung der Echtzeitausgabe eine Skalierungsrate der herunterskalierten Version des skalierbaren Datenstroms in Abhängigkeit von einem an der Netzwerkschnittstelle empfangenen Anforderungssignal zu wählen. Mit anderen Worten kann eine Qualität der Videosequenz, wie sie zur Echtzeitausgabe bereitgestellt wird, in Abhängigkeit eines empfangenen Anforderungssignals gewählt werden, so kann die Videosequenz beispielsweise in einer geringen Qualität (in Form eines stark gekürzten skalierbaren Datenstroms) für einen Vorschaumonitor bereitgestellt werden, aber auch in einer hohen Qualität (beispielsweise in Form eines ungekürzten skalierbaren Datenstroms), beispielsweise für eine Weiterverarbeitung, bereitgestellt werden. Mit anderen Worten kann die erfasste Videosequenz direkt während der Erfassung (während der Aufzeichnung) in verschiedenen Qualitäten angefordert und von dem Videoaufnahmesystem bereitgestellt werden.

Gemäß weiteren Ausführungsbeispielen kann der Komprimierer ausgebildet sein, um den in dem Speicher ungekürzt abgelegten skalierbaren Datenstrom herunterzuskalieren und in Erwiderung eines (externen) Anforderungssignals an der Netzwerkschnittstelle bereitzustellen. Eine Skalierungsrate bei der Herunterskalierung des ungekürzt in dem Speicher abgelegten Datenstroms kann beispielsweise in Abhängigkeit von dem an der Netzwerkschnittstelle empfangenen Anforderungssignal gewählt werden. Mit anderen Worten kann der Komprimierer nicht nur bei der Echtzeitausgabe den skalierbaren Datenstrom in einer herunterskalierten Version bereitstellen, sondern kann diesen auch noch nachträglich nach der Erfassung aus dem Speicher heraus herunterskalieren und über die Netzwerkschnittstelle übertragen. Die Videoaufnahme liegt daher in einer hohen Qualität in dem Speicher vor und kann in beliebigen Qualitätsstufen aus diesem Speicher angefordert werden. Dies kann beispielsweise vorteilhaft bei Überwachungssystemen verwendet werden, um im Nachhinein Videoaufnahmen auszuwerten. So kann die hochqualitative Version der Videoaufnahme erst angefordert werden, wenn bei der Sichtung der niedrig qualitativen Videoaufnahme eine relevante Szene gefunden wurde. Somit kann, in Situationen, wo eine hohe Bildqualität der Videoaufnahme nicht benötigt wird, ein unnötig hoher Datenverkehr vermieden werden

### Kurzbeschreibung der Figuren

Ausführungsbeispiele der vorliegenden Erfindung werden im Folgenden anhand der beiliegenden Figuren detailliert beschrieben. Es zeigen:
- Fig. 1: ein Blockdiagramm eines Videoaufnahmesystems gemäß einem Ausführungsbeispiel der vorliegenden Erfindung;
- Fig. 2: eine schematische Darstellung eines Multikamerasystems mit zwei Videoaufnahmesystemen gemäß Ausführungsbeispielen, welche über ein Netzwerk mit verschiedenen Netzwerkteilnehmern verbunden sind;
- Fig. 3: eine mögliche Verschaltung mehrerer Videoaufnahmesysteme gemäß Ausführungsbeispielen in einem Multikamerasystem;
- Fig. 4: eine mögliche Verschaltung mehrerer Videoaufnahmesysteme gemäß Ausführungsbeispielen unter Einsatz von Standardhardware; und
- Fig. 5: ein Flussdiagramm eines Verfahrens gemäß einem Ausführungsbeispiel.

Bevor im Folgenden Ausführungsbeispiele der vorliegenden Erfindung anhand der beiliegenden Figuren beschrieben werden, wird darauf hingewiesen, dass in den Figuren gleiche Elemente oder Elemente gleicher Funktion mit denselben Bezugszeichen versehen sind und dass auf eine wiederholte Beschreibung der Elemente, welche mit denselben Bezugszeichen versehen sind, verzichtet wird. Beschreibungen von Elementen mit den gleichen Bezugszeichen sind daher untereinander austauschbar.

### Detaillierte Beschreibung von Ausführungsbeispielen

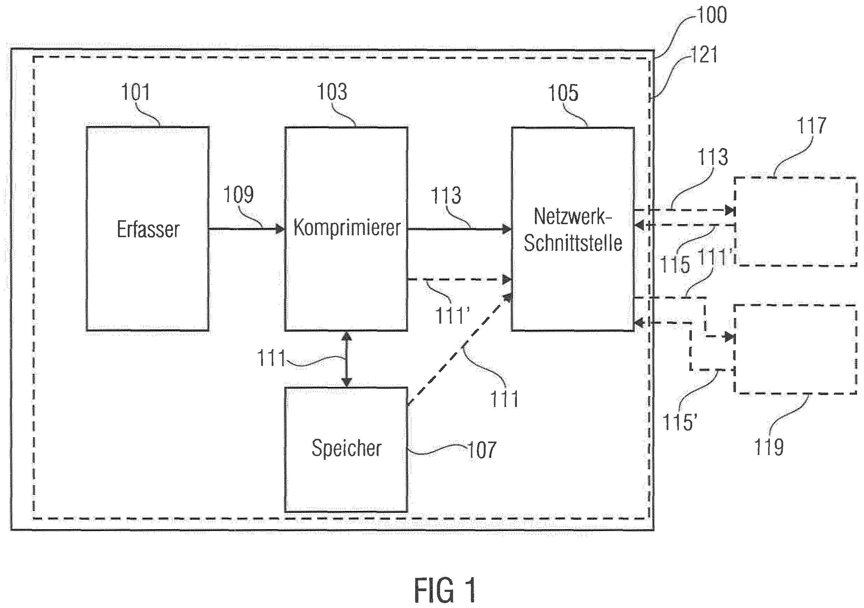

Fig. 1 zeigt ein Blockschaltbild eines Videoaufnahmesystems 100 gemäß einem Ausführungsbeispiel. Das Videoaufnahmesystem 100 weist einen Erfasser 101, einen Komprimierer 103, eine Netzwerkschnittstelle 105 und einen Speicher 107 auf. Der Erfasser 101 ist ausgebildet, um eine Videosequenz 109 zu erfassen (beispielsweise aufzunehmen). Der Erfasser 101 kann dazu beispielsweise Komponenten einer herkömmlichen Kamera (wie beispielsweise Optik, Bildsensor und Bildaufbereitung) aufweisen, kann aber auch die Videosequenz als einen unkomprimierten Datenstrom, beispielsweise von einem Bildsensor, erhalten.

Der Komprimierer 103 ist ausgebildet, um an der Videosequenz 109 eine Videokomprimierung durchzuführen, um einen skalierbaren Datenstrom 111 zu erhalten, der die Videosequenz 109 repräsentiert. Weiterhin ist der Komprimierer 103 ausgebildet, um den skalierbaren Datenstrom 111 ungekürzt in dem Speicher 107 abzulegen. Weiterhin ist der Komprimierer 103 ausgebildet, um eine Echtzeitausgabe des skalierbaren Datenstroms 111 in einer herunterskalierten Version 113 durchzuführen, beispielsweise über die Netzwerkschnittstelle 105. Weiterhin ist der gespeicherte skalierbare Datenstrom über die Netzwerkschnittstelle 105 abrufbar (beispielsweise ungekürzt, so wie er in dem Speicher 107 vorliegt oder in einer von dem Komprimierer 103 herunterskalierten Version).

Der skalierbare Datenstrom 111 kann im Folgenden auch kurz als Datenstrom 111 bezeichnet werden.

Durch das Ablegen des skalierbaren Datenstroms 111 ungekürzt in dem Speicher 107 wird ermöglicht, dass die von dem Erfasser 101 erfasste Videosequenz 109 auch zu einem späteren Zeitpunkt noch in einer hohen Qualität in dem Speicher 107 vorliegt, auch wenn während der Echtzeitausgabe die Videosequenz 109 in einer niedrigen Qualität in Form der herunterskalierten Version 113 des skalierbaren Datenstroms 111 ausgegeben wurde. Das Videoaufnahmesystem 100 ist daher ausgebildet, um einerseits den skalierbaren Datenstrom 111 in der herunterskalierten Version 113 in Form der Echtzeitausgabe (sogenannter Livestream) bereitzustellen und gleichzeitig diesen in dem Speicher 107 ungekürzt, beispielsweise für eine spätere Nachbereitung, abzulegen. Gemäß einer alternativen Vorgehensweise bzw. einem alternativen Ausführungsbeispiel wäre es aber ebenfalls möglich, dass der Datenstrom 111 gekürzt in den Speicher 107 abgelegt wird. Dies kann zum Beispiel vorteilhaft sein, wenn bereits bekannt ist, dass das Videomaterial in Form des Datenstroms 109 später lediglich für TV-Produktionen verwendet wird und das direkte Speichern des Datenstroms in ungekürzter Form, in der das Videomaterial beispielsweise in für Kinoproduktionen geeigneter Qualität vorliegt, zu einem Speicherbedarf führte, der höher als für TV-Produktionen benötigt wird. Eine unkomprimierte Auflösung bei der Speicherung in dem Speicher 107 bedeutete hier somit unnötigen Speicherverbrauch ohne Mehrnutzen. Das gekürzte Signal im Speicher 107 hätte aber auch in diesem Fall eine noch bessere Qualität als das Signal, das in Echtzeit ausgegeben und beispielsweise an einen Vorschaumonitor übertragen wird.

Wie bereits im einleitenden Teil dieser Anmeldung erwähnt, kann der Komprimierer 103 ausgebildet sein, um bei der Durchführung der Echtzeitausgabe eine Skalierungsrate der herunterskalierten Version 113 des skalierbaren Datenstroms 111 (und damit eine Qualität der bei der Echtzeitausgabe ausgegebenen Videosequenz) in Abhängigkeit von einem an der Netzwerkschnittstelle 105 empfangenen Anforderungssignal 115 wählen. So kann beispielsweise ein Netzwerkteilnehmer 117 entscheiden, in welcher Qualität er die von dem Erfasser 101 erfasste Videosequenz 109 erhalten möchte und dies dem Videoaufnahmesystem 100 in Form des Anforderungssignals 115 mitteilen, so dass der Komprimierer 103 den skalierbaren Datenstrom 111 entsprechend dem Anforderungssignal 115 herunterskaliert und dem Netzwerkteilnehmer 117 bereitstellt. Unabhängig von der durch den Teilnehmer 117 gewählten Skalierungsrate für die Echtzeitausgabe des skalierbaren Datenstroms 111 kann der Komprimierer 103 den skalierbaren Datenstrom 111 ungekürzt in dem Speicher 107 ablegen.

Mit anderen Worten beeinflusst die von dem Netzwerkteilnehmer 117 gewählte Skalierungsrate für die Bereitstellung des skalierbaren Datenstroms 111 als Echtzeitausgabe nicht die Videokomprimierung an der von dem Erfasser 101 erfassten Videosequenz 109. Der skalierbare Datenstrom 111, welcher ungekürzt in dem Speicher 107 abgelegt wird, ist daher unabhängig von der von dem Netzwerkteilnehmer 117 eingestellten Skalierungsrate für die Echtzeitausgabe. So wird ermöglicht, dass trotz einer Echtzeitausgabe mit einer geringeren Qualität der Videosequenz 109, die Videosequenz 109 in Form des skalierbaren Datenstroms 111 ungekürzt in dem Speicher 107, also in hoher Qualität, vorliegt und diese auch zu einem späteren Zeitpunkt noch abrufbar ist. So wird beispielsweise ermöglicht, dass der Netzwerkteilnehmer 117 oder ein weiterer Netzwerkteilnehmer 119 zu einem späteren Zeitpunkt auf die in dem Speicher 107 in hoher Qualität vorliegende Videosequenz zugreifen kann, unabhängig von der Qualität der Videosequenz bei der vorhergehenden Echtzeitausgabe.

Gemäß weiteren Ausführungsbeispielen kann der Komprimierer 103 ausgebildet sein, um den in dem Speicher 107 ungekürzt abgelegten skalierbaren Datenstrom 111 in Erwiderung eines weiteren Anforderungssignals 115' herunterzuskalieren und an der Netzwerkschnittstelle 105 bereitzustellen. So kann beispielsweise der weitere Netzwerkteilnehmer 119 das weitere Anforderungssignal 115' an die Netzwerkschnittstelle 105 senden, um den in dem Speicher 107 ungekürzt abgelegten Datenstrom 111 anzufordern. Der ungekürzt abgelegte skalierbare Datenstrom 111 kann dabei direkt von der Netzwerkschnittstelle 105 aus dem Speicher 107 ausgelesen werden und an den weiteren Netzwerkteilnehmer 119 übertragen werden. Weiterhin kann der Komprimierer 103 aber auch ausgebildet sein, um eine Skalierungsrate bei der Herunterskalierung des ungekürzt in dem Speicher 107 abgelegten Datenstroms 111 in Abhängigkeit des an der Netzwerkschnittstelle 105 empfangenen weiteren Anforderungssignals 115' zu wählen. Der Komprimierer 103 kann in Erwiderung des weiteren Anforderungssignals 115' den ungekürzt in dem Speicher 107 abgelegten skalierbaren Datenstrom 111 herunterskalieren und als eine weitere gekürzte Version 111' des skalierbaren Datenstroms 111 an der Netzwerkschnittstelle 105 dem weiteren Netzwerkteilnehmer 119 bereitstellen.

Mit anderen Worten kann das Videoaufnahmesystem 100 nicht nur ausgebildet sein, um bei der Echtzeitausgabe den skalierbaren Datenstrom 111 in der gekürzten Version 113 auszugeben, sondern auch den in dem Speicher 107 ungekürzt abgelegten skalierbaren Datenstrom 111 in der weiteren verkürzten Version 111', welche unabhängig von der gekürzten Version 113 für die Echtzeitausgabe des skalierbaren Datenstroms 111 ist, auszugeben.

Damit der in dem Speicher 107 ungekürzt abgelegte skalierbare Datenstrom 111 auch für weitere Netzwerkteilnehmer zugängig ist, kann der Komprimierer 103 ausgebildet sein, um das Herunterskalieren des ungekürzt in dem Speicher 107 abgelegten skalierbaren Datenstroms 111 so durchzuführen, dass derselbe ungekürzt in dem Speicher 107 erhalten bleibt. Mit anderen Worten kann der Komprimierer 103 ausgebildet sein, um bei der Bereitstellung der weiteren gekürzten Version 115' des skalierbaren Datenstroms 111 den skalierbaren Datenstrom 111 selbst, so wie er in dem Speicher 107 gespeichert ist, nicht zu verändern.

Gemäß weiteren Ausführungsbeispielen kann das Videoaufnahmesystem 100 ein (handtragbares) Gehäuse 121 aufweisen, in dem der Erfasser 101, der Komprimierer 103, der Speicher 107 sowie die Netzwerkschnittstelle 105 angeordnet sind. Das Gehäuse 121 kann beispielsweise Bestandteil eines tragbaren oder beweglichen Kamerasystems sein. Die (Netwerk-) Teilnehmer 117, 119 können dabei extern zu dem Gehäuse 121 sein und beispielsweise über (Netzwerk-) Kabel mit der Netzwerkschnittstelle 105 des Videoaufnahmesystems 100 verbunden sein.

Gemäß weiteren Ausführungsbeispielen ermöglicht die Verwendung des skalierbaren Datenstroms 111 und die Speicherung dessen in dem Speicher 107, dass ansprechend auf ein empfangenes Anforderungssignal 115 eines Netzwerkteilnehmers (beispielsweise des Netzwerkteilnehmers 117), welcher schon einen Teil des Datenstroms in einer gekürzten oder herunterskalierten Version erhalten hat (beispielsweise direkt im Rahmen der Echtzeitausgabe oder, ansprechend auf ein nach der Echtzeitausgabe erhaltenes Anforderungssignal 115, aus dem Speicher 107) nur die Differenz bzw. der Rest des skalierbaren Datenstroms 111 zwischen der angeforderten Version des skalierbaren Datenstroms 111 und der bereits zu dem Netzwerkteilnehmer 117 übertragenen gekürzten oder herunterskalierten Version des skalierbaren Datenstroms 111 zu dem Netzwerkteilnehmer 117 übertragen wird. Der Netzwerkteilnehmer 117 kann dann die erhaltene Differenz bzw. den erhaltenen Rest mit der bereits erhalten gekürzten oder herunterskalierten Version des skalierbaren Datenstroms 111 kombinieren, um die angeforderte Version des skalierbaren Datenstroms 111 zu erhalten.

Mit anderen Worten kann der Komprimierer 103 ausgebildet sein, um in Erwiderung des von dem Netzwerkteilnehmer 117 empfangenen Anforderungssignals 115 zur Anforderung einer gegenüber dem Netzwerkteilnehmer 117 bereits übertragenen herunterskalierten Version des skalierbaren Datenstroms 111 weniger herunterskalierten (bzw. weniger gekürzten) Version des skalierbaren Datenstroms 111, dem Netzwerkteilnehmer 117 (nur) die Differenz zwischen der bereits an diesen Netzwerkteilnehmer 117 übertragenen Version des skalierbaren Datenstroms 111 und der angeforderten weniger herunterskalierten Version des skalierbaren Datenstroms 111 an der Netzwerkschnittstelle 105 zur Übertragung bereitzustellen, um diese dem Netzwerkteilnehmer 117 über die Netzwerkschnittstelle 105 zu übertragen.

Der Komprimierer 103 kann daher ausgebildet sein, um in Erwiderung des von dem Netzwerkteilnehmer 117 empfangenen Anforderungssignals 115 ein erneutes Übertragen von Teilen des skalierbaren Datenstroms 111, welche bereits zu dem Netzwerkteilnehmer 117 übertragen wurden, zu unterlassen.

Es wurde erkannt, dass es nicht nötig ist, ein komplettes, hochqualitatives Bild (also beispielsweise den Datenstrom 111 in ungekürzter Version aus dem Speicher 107) an einen Empfänger oder Netzwerkteilnehmer zu senden, wenn dieser bereits einen Teil des skalierbaren Datenstroms 111 (beispielsweise im Rahmen der Echtzeitausgabe und/oder in Erwiderung eines Anforderungssignals 115 aus dem Speicher 107 in Form eines JPEG 2000 Stroms) erhalten hat und lediglich noch die Pakete (bzw. den Rest oder die Differenz) benötigt, die aus dem "kleinen" Bild ein "großes" Bild machen.

Mit anderen Worten kann das Videoaufnahmesystem 100, wie bereits oben mit anderen Worten beschrieben, die folgende Prozedur durchführen:
Aufnehmens eines Bildes oder Videos und komprimieren dessen, um den skalierbaren Datenstrom 111 zu erhalten und Senden einer herunterskalierten Version des komprimierten Bilds oder Videos (beispielsweise als die gekürzte Version 113 für die Echtzeitausgabe des skalierbaren Datenstroms 111) an einen Empfänger bzw. Netzwerkteilnehmer (in geringer Qualität/geringer Auflösung). Ferner wird das komprimierte Bild oder Video im Speicher 107 in hoher Qualität/hoher Auflösung abgelegt (beispielsweise in Form des Datenstroms 111).

Möchte nun der Empfänger oder Netzwerkteilnehmer das Bild oder Video in einer besseren Variante (hohe Qualität/hohe Auflösung) haben und fragt diese Version beim Videoaufnahmesystem 100 (oder Speichersystem 100) beispielsweise mittels des Anforderungssignals 115 an, so sendet das Videoaufnahmesystem 100 (mittels der Netzwerkschnittstelle 105) die noch nicht gesendeten Pakete für die hohe Qualität/hohe Auflösung bzw. den Rest oder die Differenz des skalierbaren Datenstroms 111, der dem Empfänger oder Netzwerkteilnehmer noch fehlt, um das Bild oder Video in der hohen Qualität/hohen Auflösung zu erhalten, an den Empfänger bzw. Netzwerkteilnehmer.

Dieses beschriebene Prinzip ermöglicht, dass der Datenverkehr während der Übertragung im Vergleich zu anderen Verfahren verringert wird, bei denen das "kleine" Bild im Empfänger verworfen wird, wenn das "große" Bild angefragt wird. Bei Ausführungsbeispielen wird daher das "kleine" Bild (niedrige Qualität/niedrige Auflösung) mit zusätzlichen (JPEG 2000) Daten angereichert, um dadurch ein "großes" Bild (hohe Qualität/hohe Auflösung) erhalten zu können.

Ferner ist es gemäß weiteren Ausführungsbeispielen auch möglich, dass der Komprimierer 103 ausgebildet ist, um nur den noch nicht zu dem Netzwerkeilnehmer 117 übertragenen Teil des skalierbaren Datenstroms 111 in dem Speicher 107 abzulegen. So kann beispielsweise der Komprimierer 103 ausgebildet, um den zu der herunter herunterskalierten Version 113 des skalierbaren Datenstroms 111 (welche ja bereits in der Echtzeitausgabe an den Netzwerkteilnehmer 117 übertragen wurde) fehlenden Teil des skalierbaren Datenstroms in dem Speicher 107 abzulegen. Der Netzwerkteilnehmer 117 kann diesen fehlenden Teil oder sogar nur eine gekürzte Version dieses fehlenden Teils später (basierend auf einem Anforderungssignal 115) über die Netzwerkschnittstelle 105 abrufen.

Dadurch wird ermöglicht, dass nur die Teile des Datenstroms 111 in dem Speicher 107 abgelegt werden, welche noch nicht an den Netzwerkteilnehmer 117 übertragen wurden, wodurch beispielsweise die Speicheranforderungen an den Speicher 107 reduziert werden können und/oder mehr Bilder oder längere Videos aufgenommen und in dem Speicher 107 gespeichert werden können, als dies bei Systemen möglich ist bei denen der komplette Datenstrom 111 (ungekürzt) in dem Speicher 107 abgelegt wird.

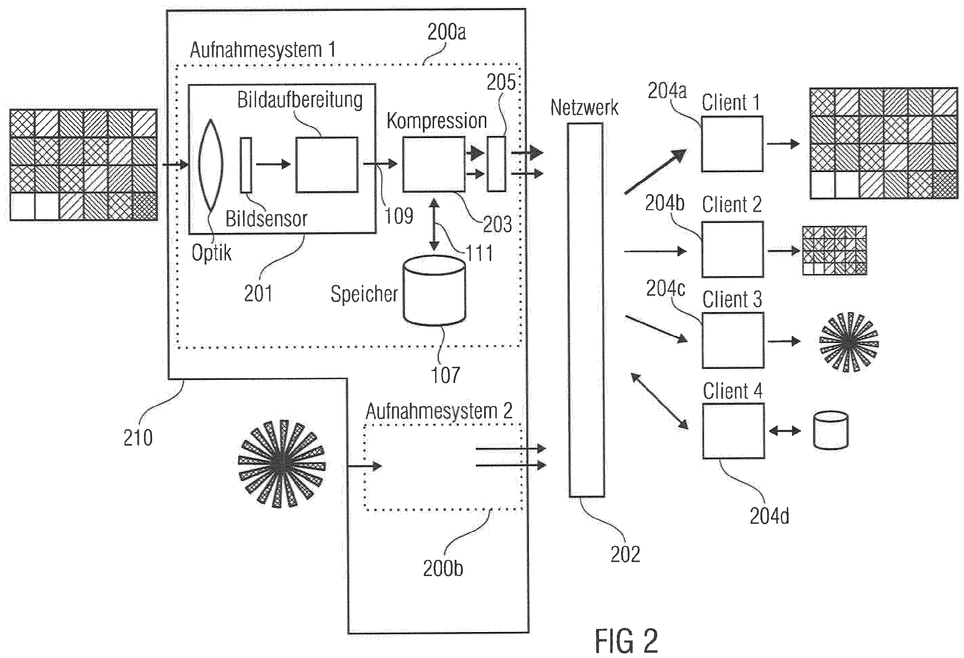

Fig. 2 zeigt eine schematische Darstellung eines Multikamerasystems 210 zur Aufzeichnung einer Vielzahl von Videosequenzen, welches über ein Netzwerk 202 mit einer Mehrzahl von Netzwerkteilnehmern 204a - 204d (auch bezeichnet als Client 204a - 204b, Client - Klient) verbunden ist. Das Multikamerasystem 210 weist ein erstes Videoaufnahmesystem 200a, auch bezeichnet als Aufnahmesystem 1, und ein zweites Videoaufnahmesystem 200b, auch bezeichnet als Aufnahmesystem 2, auf. Die Videoaufnahmesysteme 200a, 200b entsprechen in ihrer Funktionalität dem Videoaufnahmesystem 100 gemäß Fig. 1 und weisen zusätzliche in Fig. 2 gezeigte optionale Bestandteile auf. Die beiden Videoaufnahmesysteme 200a, 200b können identisch sein, daher wird im Folgenden stellvertretend für das zweite Videoaufnahmesystem 200b das erste Videoaufnahmesystem 200a beschrieben.

Jedes der Aufnahmesystem 200a, 200b kann in einem eigenen(Kamera-) Gehäuse untergebracht sein. Das Multikamerasystem 210 kann daher mehrere voneinander entfernte Aufnahmesysteme aufweisen, welche mit Kabeln verbunden sind. Gemäß weiteren Ausführungsbeispielen kann das Netzwerk 202 (beispielsweise in Form eines Multiplexers oder Netzwerkumschalter (beispielsweise ein sogenannter Switch oder Router) und zugehöriger Kabel) ein Bestandteil des Multikamerasystems 210 sein.

Das erste Videoaufnahmesystem 200a unterscheidet sich von dem Videoaufnahmesystem 100 gemäß Fig. 1 dadurch, dass ein Erfasser 201 des ersten Videoaufnahmesystems 200a als eine Kamera ausgebildet ist, d. h. es weist eine Optik, einen Bildsensor und eine Bildaufbereitung auf. Eine Funktionalität des Erfassers 201 entspricht der Funktionalität des Erfassers 101, wobei der Erfasser 201 die Videosequenz nicht in Form eines Datenstroms zur Verfügung gestellt bekommt, sondern die Videoaufnahme selbst mit Hilfe des Bildsensors aufnimmt (beispielsweise filmt).

Weiterhin weist das erste Videoaufnahmesystem 200a einen Komprimierer 203 auf (auch bezeichnet als Modul zur Kompression), dessen Funktionalität der Funktionalität des Komprimierers 103 gemäß Fig. 1 entspricht, der aber zusätzlich die im Folgenden beschriebenen optionalen Eigenschaften aufweist.

Weiterhin weist das erste Videoaufnahmesystem 200a einen Speicher 107 auf, welcher dem Speicher 107 gemäß Fig. 1 entspricht.

Weiterhin weist das erste Videoaufnahmesystem 200a eine Netzwerkschnittstelle 205 auf, welche der Netzwerkschnittstelle 105 gemäß Fig. 1 entspricht und zusätzlich die im Folgenden beschriebenen optionalen Eigenschaften aufweist.

Die grundlegende Funktionalität des ersten Videoaufnahmesystems 200 entspricht damit der Funktionalität des Videoaufnahmesystems 100 und bildet damit eine mögliche Implementierung des Videoaufnahmesystems 100. Im Folgenden wird eine Funktionsweise des in Fig. 2 gezeigten Multikamerasystems 210 erläutert.

Die Videodaten (die von dem Erfasser 101 erfasste Videosequenz 109) werden (wird) zunächst in hoher Qualität komprimiert (unter Nutzung des Komprimierers 103). Dazu wird ein Verfahren gewählt, das einen skalierbaren Datenstrom generiert. Skalierbare Bilddaten erlauben das Decodieren eines Subbildes (z. B. mit einer geringeren Auflösung oder niedriger Qualität), indem lediglich ein kleinerer Teil aus dem kompletten Datenstrom (beispielsweise aus dem in dem Speicher 107 ungekürzt abgelegten skalierbaren Datenstrom 111) gelesen und verarbeitet wird, es sind also keine Transcoding-Schritte (Transcoding-Neucodierung) nötig, um eine neue Repräsentation von einem Bild (der Videosequenz 109) zu bekommen. Beispiele für solche Komprimierungsverfahren sind JPEG2000 oder H.264 SVC, welche bei der Durchführung der Videokomprimierung der Videosequenz 109 von dem Komprimierer 203 durchgeführt werden können.

Diese Daten (der skalierbare ungekürzte Datenstrom 111) werden (wird) dann in hoher Qualität in den Speicher 107 geschrieben. Durch die Kompression sind Puffergrößen realisierbar, die über einen längeren Zeitraum ausreichend Speicherplatz bieten.

Gemäß weiteren Ausführungsbeispielen kann bei einem vollen Puffer bzw. bei einem vollen Speicher die Aufnahme (die erfasste Videosequenz 109) beendet werden, oder wie bei einem Ringpuffer verfahren werden, d. h. die ältesten Daten werden mit den neuesten Daten überschrieben.

Gemäß weiteren Ausführungsbeispielen ist es auch möglich, dass bei Erreichen des maximalen Füllstands des Puffers (der maximalen Kapazität des Speichers 107) die Qualität der neuen Daten (Speicherung nur noch in verringerter Qualität) und/oder bereits gespeicherten Daten (Verwerfen der obersten Qualitätsschichten der bereits gespeicherten Daten) angepasst wird.

Mit anderen Worten kann der Komponenten 203 ausgebildet sein, um bei Erreichen einer maximalen Speicherkapazität des Speichers 107 oder zumindest bei einem Annähern an die maximale Speicherkapazität des Speichers 107 den in dem Speicher 107 ungekürzt abgelegten skalierbaren Datenstrom 111 herunterzuskalieren, derart, dass eine Speichergröße des in dem Speicher 107 abgelegten skalierbaren Datenstroms 111 sinkt. Dadurch wird ermöglicht, dass in dem Speicher 107 zusätzliche Kapazitäten frei werden, um weitere Daten abzulegen, so dass eine Aufnahme nicht beendet werden muss, aufgrund dessen, weil der Speicher 107 voll ist.

Weiterhin kann, wie bereits erwähnt, der Komprimierer 103 aber auch ausgebildet sein, um bei einen Annähern an die maximale Speicherkapazität des Speichers 107 den skalierbaren Datenstrom 111 bereits vor dem Ablegen in dem Speicher 107 herunterzuskalieren und in einer speicherangepassten herunterskalierten Version in dem Speicher 107 abzulegen.

Dadurch kann die nutzbare Aufnahmedauer immer wieder bei Erreichen des Füllstandes verlängert werden. Die Aufnahmen sind dann zwar nur noch in verringerter Qualität vorhanden, jedoch ist es möglich, eine längere Aufnahmedauer zu erreichen. Für die tatsächliche Aufnahmedauer wird damit automatisch der vorhandene Platz optimal ausgenutzt und genau die bestmögliche Qualität des Bildmaterials (der Videosequenz 109) gespeichert.

Weiterhin kann auch eine Übertragung der Einzelbilder der Videoaufzeichnung ebenfalls über eine komprimierte und skalierbare Datenübertragung erfolgen.

Die Netzwerkschnittstelle 205, welche mit dem Netzwerk 202 verbunden ist, dient dazu, eine Server-Komponente zu realisieren. Die bereits aufgenommenen Bilddaten (der in dem Speicher 107 abgelegte skalierbare Datenstrom 111) sowie das aktuelle Bild (in Form der Echtzeitausgabe) werden in verschiedenen Qualitäten angeboten. Ein Netzwerkteilnehmer oder Client 204a - 204d kann dann die verschiedenen Aufnahmesysteme 200a, 200b des Multikamerasystems 210 abfragen und Bilddaten (Datenströme) anfordern.

Die Clients greifen nun auf die Datenströme zu. Jeder Client kann dabei zwischen aktuellen Daten (auch vergleichbar der herunterskalierten Version 113 des Datenstroms 111) oder Aufzeichnungen (vergleichbar der weiteren herunterskalierten Version 111' des Datenstroms 111) wählen. Die Beispiele in Fig. 2 zeigen:
- Einen ersten Client 204a (Client 1), der ein System ist, das direkt die volle Qualität benötigt und anzeigt. Der erste Client 204a ist beispielsweise der Schnittplatz, der die Weitergabe der gerade ausgewählten Videodaten an eine weitere Sendekette durchführt. Eine große Datenmenge wird daher von dem ersten Aufnahmesystem 200a angefordert (beispielsweise in Form eines von dem ersten Client 204a ausgesendeten Anforderungssignals) und über das Netzwerk 202 übertragen. Der erste Client 204a kann daher den Datenstrom 111 in einer ungekürzten Version als Echtzeitausgabe erhalten.
- Einen zweiten Client 204b (Client 2) der nur auf eine geringere Qualität zugreift und dazu auch nur eine kleine Datenrate benötigt (und damit eine herunterskalierte Version des von dem ersten Aufnahmesystem 200a bereitgestellten Datenstroms). Der zweite Client 204b ist zum Beispiel ein Vorschaumonitor.

Der Komprimierer 203 kann ausgebildet sein, um gleichzeitig dem ersten Client 204a den Datenstrom 111 als Echtzeitausgabe in einer ungekürzten Version oder einer (geringfügig) gekürzten Version dem ersten Client 204a bereitzustellen und weiterhin den Datenstrom in einer gekürzten Version, welche von dem Datenstrom für den ersten Client 204a verschieden ist (beispielsweise stärker gekürzt), dem zweiten Client 204b bereitzustellen. Mit anderen Worten kann der Komprimierer 203 ausgebildet sein, um verschiedene gekürzte Versionen des durch Videokomprimierung der Videosequenz 109 erhaltenen Datenstroms bei der Echtzeitausgabe bereitzustellen, beispielsweise in Abhängigkeit von an der Netzwerkschnittstelle 205 empfangenen Anforderungssignalen. Weiterhin kann der Komprimierer 203 auch ausgebildet sein, um gleichzeitig verschieden gekürzte Versionen des in dem Speicher 107 ungekürzt abgelegten Datenstroms 111 an der Netzwerkschnittstelle 205, beispielsweise in Abhängigkeit von empfangenen Anforderungssignalen, bereitzustellen.
- Einen dritten Client 204c (Client 3) der auf Videodaten (Datenströme) eines anderen Aufnahmesystems (des zweiten Aufnahmesystems 200b) zugreift. Ein Gesamtsystem (beispielsweise das Multikamerasystem 210 in Fig. 2) kann damit für viele Kameras, Clients und Speicher eingesetzt werden. Eine Begrenzung steckt nicht wie bisher in den Fähigkeiten der Netzwerkkomponenten (wie beispielsweise die Zahl der Ports (Anschlüsse) bei einem HD-SDI-Switch - High Definition Serial Digital Interface Umschalter), sondern in der Verarbeitungsleistung der Clients. Das System kann damit viel besser und günstiger skalieren. Als Beispiel kann selbst mit 100 Aufnahmesystemen ein einfacher Laptop zur Betrachtung/Bearbeitung genügen.
- Einen vierten Client 204d (Client 4) der selbst wieder ein Speichersystem besitzt. Es können damit Daten von Speichern umkopiert werden oder selbst wieder Daten von früheren Aufnahmen bereitgestellt werden. Diese Kopieraktionen erfordern keine hohe Priorisierung des Datenverkehrs, da sie nicht zwingend in Echtzeit ablaufen müssen (wie dies beispielsweise bei Echtzeitwiedergaben der Fall sein kann). Weiterhin kann auch eine Aufteilung erfolgen, die eine Kopie der geringen Vorschauqualität in Echtzeit anfertigt und die verbleibenden Qualitätsschichten ohne Echtzeitanforderung bei verbleibenden Netzwerkressourcen nachzieht. Mit anderen Worten kann der Komprimierer 203 ausgebildet sein, um zuerst in Echtzeit einen herunterskalierten (gekürzten) Datenstrom der erfassten Videosequenz 109 bereitzustellen, um anschließend, beispielsweise bei freien Netzwerkkapazitäten, die zuvor herunterskalierten bzw. gekürzten Teile des Datenstroms, welche ja im Speicher 107 vorliegen, an den zugehörigen Netzwerkteilnehmer übermitteln, so dass die Videosequenz in hoher Qualität beim Netzwerkteilnehmer rekonstruiert werden kann.

Weiterhin kann der Komprimierer 203 ausgebildet sein, um bei dem Herunterskalieren des Datenstroms (sowohl für die Echtzeitausgabe als auch für die Ausgabe aus dem Speicher 107) eine Anzahl von Einzelbildern der Videosequenz 109 beizubehalten. Mit anderen Worten kann der Komprimierer 203 das Komprimierverfahren so wählen, dass keine Reduktion der zeitlichen Auflösung durch Weglassen von Einzelbildern der Videosequenz 109 erfolgt.

Gemäß weiteren Ausführungsbeispielen kann der Komprimierer 203 bei der Herunterskalierung des skalierbaren Datenstroms eine Datenrate der Einzelbilder der Videosequenz 109 reduzieren. Dies lässt sich besonders unter Nutzung der bereits erwähnten Videokomprimierungsverfahren JPEG2000, H.264 SVC einfach realisieren. Vorzugsweise ist der Komprimierer derart ausgebildet, dass der skalierbare Datenstrom 111 durch einfaches Weglassen von Abschnitten des skalierbaren Datenstroms 111 ohne Transkodierung herunter-skalierbar ist.

Im Folgenden soll die Anwendung von Videoaufnahmesystemen gemäß Ausführungsbeispielen am Beispiel einer Fernsehproduktion unter Nutzung einer Mehrzahl von solchen Videoaufnahmesystemen beschrieben werden.

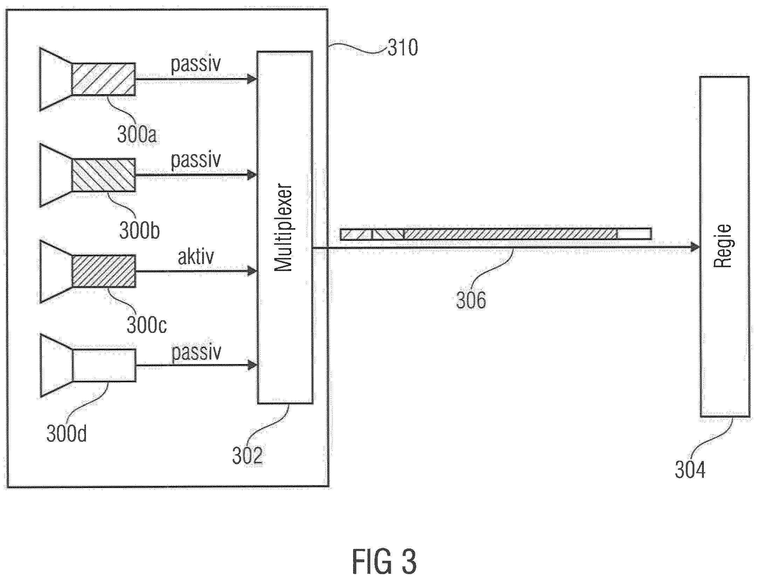

Fig. 3 zeigt ein Multikamerasystem 310 mit einer Mehrzahl von Kameras 300a - 300d. Jede der Kameras 300a - 300d weist ein Videoaufnahmesystem gemäß einem Ausführungsbeispiel auf. So kann jede der Kameras 300a - 300d beispielsweise das Videoaufnahmesystem 100 gemäß Fig. 1 oder das Videoaufnahmesystem 200 gemäß Fig. 2 oder ein weiteres Videoaufnahmesystem gemäß Ausführungsbeispielen aufweisen. Die Kameras 300a - 300d sind mit einem Multiplexer 302 des Multikamerasystems 310 verbunden, welcher über eine Leitung mit einem Netzwerkteilnehmer 304 (auch bezeichnet als Regie 304) verbunden ist. Der Multiplexer dient dazu, um die von den Kameras 300a - 300d erhaltenen Datenströme über eine Transportleitung 306 dem Netzwerkteilnehmer 304 zur Verfügung zu stellen. Für das Beispiel einer herkömmlichen Fernsehproduktion greift nun der Netzwerkteilnehmer 304 auf die verschiedenen Kameras zu. Mit jeweils nur einer aktiven Kamera (in Fig. 3 beispielhaft die Kamera 300c) ergibt sich nun für die Netzwerk-übertragung eine Einsparung wie in Fig. 3 dargestellt. Hierbei erhält jedes Kamerasystem (jedes Videoaufnahmesystem einer Kamera) einen Zustand: aktiv bedeutet, dass ein System die volle Qualität und Auflösung an die Regie 304 sendet (beispielsweise einen ungekürzten Datenstrom der aufgenommenen Videosequenz); passiv bedeutet, dass lediglich eine reduzierte Qualität/Auflösung an die Regie 304 gesendet wird (beispielsweise in Form eines herunterskalierten bzw. gekürzten skalierbaren Datenstroms einer aufgenommenen Videosequenz), um die Datenlast zu reduzieren.

In dem in Fig. 3 gezeigten Beispiel ist immer genau eine Kamera im aktiven Zustand. Wird das Signal einer Kamera für den Zusammenschnitt der Sendung live benötigt, sendet die Kamera (beispielsweise die Kamera 300c) die volle Auflösung/Qualität (Zustand: aktiv). Wird ein Signal gerade nicht live benötigt, genügt eine Übertragung in geringerer Auflösung/Qualität (beispielsweise in Form eines gekürzten oder herunterskalierten Datenstroms) an die Regie (Zustand: passiv). Hierdurch hat die Regie 304 auf der einen Seite noch eine genügend große Vorschaumöglichkeit, mit Hilfe der von den passiven Kameras 300a, 300b, 300c gesendeten herunterskalierten Datenströme. Auf der anderen Seite führt die Reduktion der Auflösung/Qualität aber zu geringeren Datenmengen, die über das Netzwerk, also über den Multiplexer 302 und über die Datenübertragungsleitung 306 zwischen Kameras 300a - 300d und Regie 304 bzw. dem Regieraum gesendet werden müssen.

Hierdurch ergeben sich unter anderem folgende Vorteile: eine geringere Qualität spart Datenrate und benötigt auch deutlich weniger Rechenleistung für die Decodierung und Anzeige. Durch die Verwendung eines Speichers an der Kamera (beispielsweise des Speichers 107 des Videoaufnahmesystems 100 oder des Videoaufnahmesystems 200) - der die Bilddaten in maximaler Qualität und Auflösung speichert (in Form des ungekürzt abgelegten Datenstroms 111) - können später bei Bedarf hochqualitativere Bilder nachgefordert werden.

Ein Beispiel hierfür wäre eine Wiederholung einer entscheidenden Situation bei einer Sportveranstaltung von einer Kamera, die vorher nicht im aktiven Modus geschaltet war: Hier konnte die Regie zwar feststellen, dass die Kamera die entscheidenden Daten aufgenommen hat, die gesendeten, wie z.B. in die Regie übertragenen, Daten selber sind aber qualitativ zu minderwertig, um sie an die Zuschauer zu senden. Aus diesem Grund werden die entsprechenden Daten aus dem Speicher des jeweiligen Aufnahmesystems nachgefordert und dann an die Zuschauer gesendet. Die genannten Lösungen lassen sich dabei sowohl für konventionelle Einzelkameras als auch für 3D Stereokameraanordnungen (ein Kamerapaar an jeder Position) einsetzen.

Für den Einsatz in der Raum- und Objektüberwachung lassen sich von jeder Kamera relativ stark komprimierte Daten in die Überwachungszentrale übertragen, die jedoch qualitativ mindestens dem entsprechen, was mit derzeitiger Technik realisierbar ist. Bei Eintritt eines Ereignisses, das im Nachhinein näher analysiert werden soll, können von den interessierenden Kameras die Bilder für den entsprechenden Zeitraum in optimaler Qualität direkt von den jeweiligen Kameras abrufen. Das Eintreten eines Ereignisses kann dabei manuell durch den Operator, über automatische Bildverarbeitungs- und Überwachungsalgorithmen oder durch weitere Sensoren (z. B. Bewegungsmelder, Rauchmelder etc.), beispielsweise an einem Ort der Videoaufnahmesysteme bzw. Kameras oder als Bestandteile der Videoaufnahmesysteme bzw. Kameras, erkannt werden.

Wird für die Überwachung oder Medienproduktion eine geeignete Anzahl von Kameras in einer geeigneten Anordnung eingesetzt, lassen sich mit diesem Aufbau sowohl konventionelle zweidimensionale Bilder als auch Aufnahmen aus mehreren Ansichten (Multiview) oder stereoskopischen Aufnahmen übertragen. Weiterhin können auch Aufnahmen aus speziellen Anordnungen zur Aufnahme von Lichtfeldern aufgezeichnet und übertragen werden. Beispielsweise können diese Aufnahmen aus Kameras mit Primäroptik und Mikrolinsen und/oder Kameraarrays gewonnen werden. Auch in diesen Fällen ist es möglich, über die Skalierbarkeit (in Qualität oder örtlicher Auflösung) nur einen Ausschnitt aus den aufgenommen Daten zu übertragen. Bei Lichtfeldern ergibt sich dieser Bereich aus den Kameraeigenschaften und der Geometrie der Anordnung. Aus diesen Abtastungen der Lichtinformation der Szene kann nachträglich beispielsweise eine 2D- oder stereoskopische 3D-Ansicht der Szene innerhalb der Grenzen der zur Verfügung stehenden Lichtfelddaten für beliebige virtuelle Kamerapositionen und -ausrichtungen berechnet werden. Innerhalb des beschriebenen Einsatzszenarios werden dabei zunächst relativ stark komprimierte Daten für das abgetastete Lichtfeld live in die Bildregie übertragen. Nach Eintreten eines Ereignisses und Auswahl einer neu zu berechnenden virtuellen Kameraposition werden dann die qualitativ optimalen Bilddaten, die für die Berechnung des virtuellen Kamerabildes erforderlich sind, von den betreffenden Kameras in die Zentrale übertragen. Unbenommen davon lassen sich auch Bilder einzelner Kameras der Lichtfeldaufnahmeanordnung, wie oben beschrieben, in hoher oder niedriger Qualität an die Zentrale übertragen. Beispielsweise kann auch nur aus den Kameradaten von zwei Ansichten in hoher Qualität eine Zwischenansicht errechnet und an den Betrachter übertragen werden.

Gemäß weiteren Ausführungsbeispielen kann die Übertragung im Netzwerk über eine "Quality of Service" (über ein Prioritätensystem) gesichert werden. Dazu kann beispielsweise für die hochqualitative Version (beispielsweise die von der Kamera 300c in Fig. 3 übertragenen Daten) eine bestimmte Datenrate reserviert werden, beispielsweise um den Echtzeitanforderungen zu genügen. Weiterhin kann für Vorschaubilder (wie sie beispielsweise von dem zweiten Client 204b gemäß Fig. 2 in Form eines herunterskalierten Datenstroms angefordert werden) eine passende Priorisierung im Netzwerk eingeführt werden, die Echtzeit ermöglicht.

Die Pakete können zusätzlich oder alternativ auch so priorisiert werden, dass Daten, die für die generelle Vorschau der Bilder unabdingbar sind, auf jedem Fall durch das QoS Netz geleitet werden, da diese eine hohe Priorität haben. Pakete, die nur noch Details zu den Bildern liefern, bekommen eine geringere Priorität und werden bei Bedarf, z.B. wenn das Netz überlastet ist, verworfen.

Die Priorisierung kann also nicht nur auf verschiedenen Bildströmen stattfinden, sondern kann auch innerhalb der Pakete eines Bildes zutreffen.

Insbesondere sind also demnach die Ausführungsbeispiele, die im Vorhergehenden und unten beschrieben werden, so modifizierbar, dass die Echtzeitausgabe des skalierbaren Datenstroms nicht auf die herunterskalierte Version 113 beschränkt ist, dass aber die Echtzeitausgabe des skalierbaren Datenstroms für die herunterskalierte Version 113 mit einer höheren Priorisierung - also einen höheren Priorität für ein Netzwerk - erfolgt als für einen zu einer ungekürzten Version des skalierbaren Datenstroms fehlenden Teil des skalierbaren Datenstroms, so dass dieser Restteil bei Netzwerkengpässen nicht in den in Echtzeit ausgegebenen Version gehört, andernfalls aber eben schon.

Weitere Ausführungsbeispiele können hier Vorkehrungen treffen, um eventuell Qualitätseinbußen zu kompensieren. Für die nicht zeitkritische Übertragung (wie beispielsweise Kopieroperationen aus dem Puffer (beispielsweise aus dem Speicher 107) auf einen zentralen Speicher), wie dies beispielsweise von dem vierten Client 204d gemäß Fig. 2 durchgeführt wird, steht dann die verbleibende Datenrate zur Verfügung.

Zu einem Kompressionsmodul (beispielsweise zu dem Komprimierer 103 oder zu dem Komprimierer 203) können gleichzeitig mehrere Clients (mehrere Netzwerkteilnehmer) eine Verbindung aufbauen und Daten anfordern. Dies kann beispielsweise für Vorschaubilder dienen. Jeder Monitor (jeder Netzwerkteilnehmer) könnte damit ebenso am Netzwerk hängen und sich einen eigenen Videostrom (beispielsweise einen eigenen herunterskalierten Datenstrom) direkt von der jeweils zugeordneten Kamera (bzw. dem jeweils zugeordneten Videoaufnahmesystem) holen. Gemäß weiteren Ausführungsbeispielen können auch gleichzeitig mehrere verschiedene Versionen generiert werden (z. B. durch mehrere unabhängige Regie-Teams).

Wie bereits erwähnt, sind die aufgezeichneten Daten (der im Speicher 107 ungekürzt abgelegte Datenstrom 111) auf dem Kompressionsmodul (auf dem Speicher 107 des Aufnahmesystems 100 oder des Aufnahmesystems 200a) sowohl während als auch nach der Aufnahme vorhanden und können ausgespielt werden.

Gemäß weiteren Ausführungsbeispielen können die auf dem Speicher 107 abgelegten Datenströme bzw. Daten geeignete Metadaten (wie beispielsweise Aufnahmezeitpunkt und/oder Aufnahmeort und/oder eine Information darüber, welche Kamera die zu dem Datenstrom zugehörige Videosequenz aufgezeichnet hat) tragen. Mit anderen Worten kann ein Komprimierer (beispielsweise der Komprimierer 203) ausgebildet sein, um den skalierbaren Datenstrom mit Metadaten zu versehen, wobei die Metadaten einen Aufnahmezeitpunkt und/oder eine Information über den Erfasser der Videosequenz (beispielsweise in Form einer Identifikationsnummer) enthalten.

Weiterhin ist es während und nach der Aufnahme möglich, eine Übertragung der kompletten Daten in hoher Qualität zu starten. Mit anderen Worten kann ein Komprimierer (beispielsweise der Komprimierer 203) nach einer vollständigen Aufnahme eine Videosequenz durch einen zugeordneten Erfasser ungekürzt übertragen. Dies kann einerseits über freie Netzwerkressourcen (beispielsweise mit geringer Priorität) oder über den Tausch von Speichermedien nach der Aufnahme erfolgen. Mit anderen Worten kann der Speicher 107 ein Wechselmedium sein, um den auf dem Speicher 107 ungekürzt abgelegten Datenstrom von dem Aufnahmesystem auf ein weiteres System (wie beispielsweise einen Schnittcomputer) zu übertragen. Die Kopie eines Datensatzes ist nach und während des Kopiervorgangs ebenfalls wieder als Datensatz für einen Schnittprozess verwendbar. Der Kopiervorgang muss nicht zwingend alle Daten in voller Qualität übertragen - es kann auch eine in der Qualität reduzierte Version gelesen und als neuer Datensatz gespeichert werden. Für eine Client-Anwendung macht es keinen Unterschied ob die Daten aktuell aufgenommen, aktuell kopiert oder auf einem zentralen Speicher liegen. In allen Fällen ist die Anforderung von Daten in der gewünschten Qualität direkt vorgesehen.

Gemäß weiteren Ausführungsbeispielen kann die Netzwerkschnittstelle 205 eine Ethernet-Schnittstelle aufweisen oder eine Ethernet-Schnittstelle sein, d. h. die Netzwerkschnittstelle 205 kann ausgebildet sein, um Datenströme entsprechend dem Ethernet-Protokoll zu übertragen.

Beispielsweise kann ein Kompressionsmodul (ein Videoaufnahmesystem) in eine Kamera integriert werden und eine Übertragung über das Ethernet-Protokoll erfolgen. So kann ein Kompressionsmodul beispielsweise direkt einen Ethernet-Switch (beispielsweise umfasst von der Netzwerkschnittstelle 205) enthalten und damit die Verkettung von mehreren Kameras erlauben.

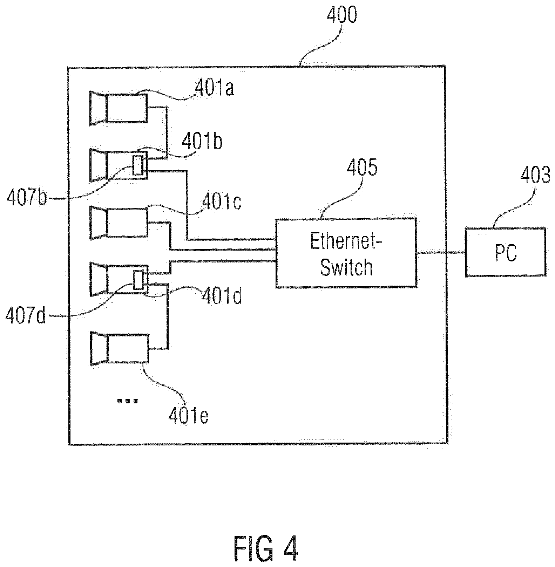

Fig. 4 zeigt ein solches System mit einer Verkettung mehrerer Kameras unter Einsatz von Standardhardware. Dazu zeigt Fig. 4 ein Blockschaltbild eines Multikamerasystems 400, welches über eine Ethernet-Schnittstelle mit einem Netzwerkteilnehmer 403, welcher in dem in Fig. 4 gezeigten Beispiel als ein einfacher Personalcomputer (PC) ausgeführt ist. Das Multikamerasystem weist eine Mehrzahl von Kameras 401 a - 401e auf. Jede der Kameras 401a bis 401e weist jeweils ein Videoaufnahmesystem gemäß Ausführungsbeispielen der vorliegenden Erfindung auf. In dem Beispiel in Fig. 4 ist eine erste Kamera 401a mit einer zweiten Kamera 401b verbunden. Die zweite Kamera 401b ist mit einem Ethernet-Switch 405 des Multikamerasystems 400 verbunden. Jede Kamera kann ein eigenes Gehäuse aufweisen und über Kabel mit den anderen Kameras verbunden sein.

Die erste Kamera 401a ist daher nicht direkt mit dem Ethernet-Switch 405, sondern über eine dem Videoaufnahmesystem der zweiten Kamera 401b internen Ethernet-Switch 407b mit dem Ethernet-Switch 405 des Multikamerasystems 400 verbunden. Mit anderen Worten weist das Videoaufnahmesystem der zweiten Kamera 401b eine Netzwerkschnittstelle auf, welche als Ethernet-Switch 407b ausgebildet ist oder Ethernet-Switch 407b aufweist, um sowohl mit dem Ethernet-Switch 405 des Multikamerasystems 400 als auch mit einer Netzwerkschnittstelle eines Videoaufnahmesystems der ersten Kamera 401a verbunden zu werden.

Analog dazu weist auch eine vierte Kamera 401d einen Ethernet-Switch 407d auf, mit dem sowohl der Ethernet-Switch 405 als auch eine fünfte Kamera 401e verbunden ist. Ausführungsbeispiele ermöglichen damit eine Verkettung von mehreren Kameras.

Weiterhin kann auch eine Stromversorgung über Ethernet erfolgen, so dass ein unkomplizierter Aufbau auch größerer Arrays (Power-over-Ethernet - PoE) ermöglicht wird. Als Client kann weiterhin ein einfacher PC 403 eingesetzt werden. Es werden dann keine speziellen Schnittstellen oder Adapter mehr benötigt. Eine Software zum Schnitt / zur Bearbeitung kann dann direkt auf die Daten der Kameras zugreifen.

Ebenso ist es möglich, dass ein Client gleichzeitig auch wieder Server ist. Ein Schnittplatz könnte damit Daten anfordern, eine Vorauswahl treffen und die vorverarbeiteten Sequenzen wieder als gepufferten Datenstrom (Stream) bereitstellen. Ohne zusätzlichen Aufwand könnte damit direkt eine geschnittene/bearbeitete Fassung einer Produktion sowie die Rohdaten für eine nachgeschaltete Regie angeboten werden.

Wie bereits erwähnt, kann ein Aufnahmesystem gemäß Ausführungsbeispielen dazu ausgebildet sein, um zusätzlich zu dem Datenstrom, der die Videosequenz repräsentiert, noch Metadaten zu den Bildern (in dem Fall zu der Videosequenz) abzuspeichern.

Diese können in einer späteren Verarbeitung wertvolle Hinweise geben. Wichtig sind z. B. eine Zuordnung zur Kamera. Nach einer Kopie/Verschiebung der Daten kann es nötig sein, dass diese dennoch eindeutig zugeordnet werden können. Ebenso können alle Daten einen Zeitstempel besitzen. Nur so ist eine spätere Zuordnung selbst bei unabhängigem Start/Ende der Einzelaufzeichnungen möglich. Weiterhin ist es möglich, zusätzlich eine Trigger-Information abzuspeichern. Diese kann einerseits durch einen Kamera-Operator ausgelöst werden (z. B. wenn interessante/wichtige Ergebnisse geschehen). Andererseits können damit auch Metadaten der Clients zu den Daten gespeichert werden. Ein Schnittplatz kann hierdurch Aussagen zur Qualität zurückmelden (wie beispielsweise "wichtiger Inhalt, dieser Teil wurde im Live-Betrieb gesendet" oder "Bildfehler, Signal unbrauchbar"). Diese Daten können bei einer späteren Nachverarbeitung die Sichtung oder Suche nach Inhalten deutlich beschleunigen.

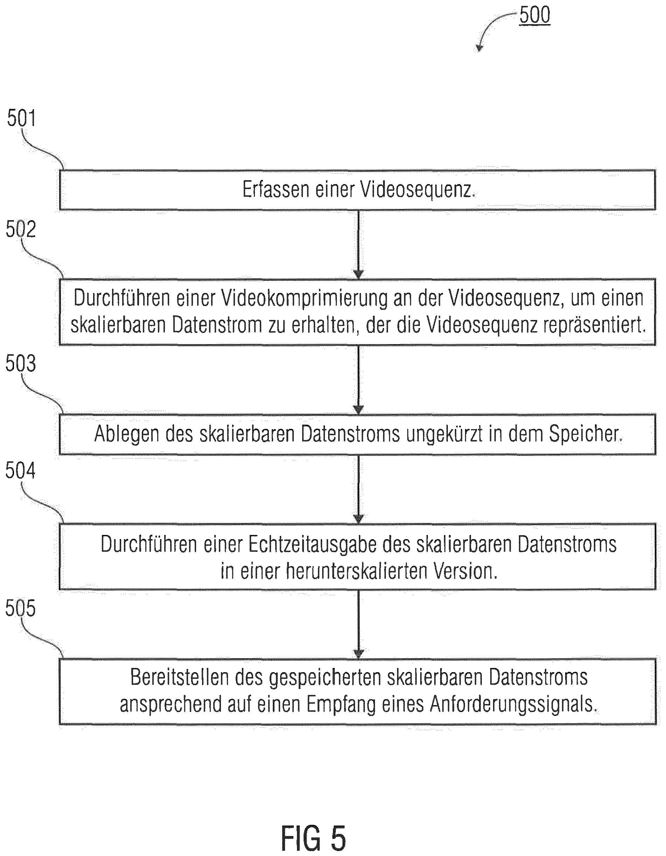

Fig. 5 zeigt ein Flussdiagramm eines Verfahrens 500 zur Videoaufnahme gemäß einem Ausführungsbeispiel.

Das Verfahren weist einen Schritt 501 des Erfassens einer Videosequenz auf.

Weiterhin umfasst das Verfahren 500 einen Schritt 502 des Durchführens einer Videokomprimierung an der Videosequenz, um einen skalierbaren Datenstrom zu erhalten, der die Videosequenz repräsentiert.

Weiterhin umfasst das Verfahren 500 einen Schritt 503 des Ablegens des skalierbaren Datenstroms ungekürzt in einem Speicher.

Weiterhin umfasst das Verfahren 500 einen Schritt 504 des Durchführens einer Echtzeitausgabe des skalierbaren Datenstroms in einer herunterskalierten Version.

Die Schritte 503, 504 des Verfahrens 500 können, gleichzeitig ausgeführt werden.

Weiterhin umfasst das Verfahren 500 einen Schritt 505 des Bereitstellen des gespeicherten skalierbaren Datenstroms ansprechend auf einen Empfang eines Anforderungssignals.

Im Folgenden sollen einige Aspekte von Ausführungsbeispielen zusammengefasst werden.

Bei Ausführungsbeispielen ist nur eine einfache Netzwerkverbindung zwischen den einzelnen Komponenten ausreichend, eine aufwendige Verkabelung zur Echtzeitübertragung kann entfallen.

Gemäß einigen Ausführungsbeispielen werden nur die Daten an die Regie übertragen, die dort benötigt werden. Hierdurch werden die Netzwerke entlastet und können dadurch günstiger aufgebaut werden.

Gemäß weiteren Ausführungsbeispielen kann durch die Verwendung von komprimierten Daten das Vorhandensein eines kostenintensiven Übertragungswagen (Ü-Wagens) überflüssig sein. Vielmehr könnte der Schnitt an einem entfernten Ort stattfinden und dadurch die Kosten der Produktion sinken.

Gemäß weiteren Ausführungsbeispielen kann die Aufnahme während oder nach einer Aufzeichnung direkt in verschiedenen Qualitäten von einem Kompressionsmodul (von einem Videoaufnahmesystem) angefordert werden. Nach der Aufnahme ist direkt ein Datensatz in hoher Qualität vorhanden, der für eine Nachverarbeitung genutzt werden kann.

Gemäß weiteren Ausführungsbeispielen lassen sich aus einer geeigneten Anordnung (Lichtfeld) im Nachhinein entsprechend der Einstellung der virtuellen Kamera hochwertige Bilddaten berechnen, ohne die sehr großen anfallenden Datenmenge aller Kameras in voller Qualität über lange Strecken übertragen zu müssen.

Weitere Ausführungsbeispiele schaffen ein System aus Kameras mit lokalem, komprimierten Speichern sowie Clients, die über ein Netzwerk auf aktuelle oder aufgezeichnete Daten zugreifen. Durch den Einsatz skalierbarer Kompression ergeben sich Vorteile, die zu einer Reduktion der übertragenen Datenmenge und damit des Aufwands und der Kosten führen. Einige Ausführungsbeispiele verwenden einen Puffer (oder Speicher) auf Seiten der Kamera und ermöglichen einen rückwirkenden Zugriff auf Bilder in einer höheren Qualität, als sie in einer Echtzeitausgabe übertragen wurden.

Ausführungsbeispiele der vorliegenden Erfindung benötigen keinen Server in einem System, da Videoaufnahmesysteme gemäß Ausführungsbeispielen bzw. Kameras direkt selbst die Daten verwalten und eine Speicherung (ähnlich einem Server) durchführen.

Weiterhin ist bei Ausführungsbeispielen ein gleichzeitiger Zugriff mehrerer Clients auf eine Kamera oder ein Videoaufnahmesystem möglich.

Bei einigen Ausführungsbeispielen erfolgt eine Kompression der erfassten Videosequenz im Puffer (bzw. im Speicher). Dadurch wird gegenüber Systemen, bei denen Bilder ausgedünnt werden, was eine starke Verschlechterung des Signals zur Folge hat, da nur wenige Bilder erhalten bleiben, eine bessere Qualität bei gleichzeitigem Erhalt aller Bilder ermöglicht.

Des Weiteren werden, insbesondere gegenüber Trigger-Systemen, bei Ausführungsbeispielen keine Bilddaten verworfen, sondern alle Bilddaten in hoher Qualität aufgezeichnet.

Weiterhin ermöglichen einige Ausführungsbeispiele der Erfindung durch den Einsatz eines skalierbaren Kompressionsformats ein Wiedergeben von Bilddaten in geringer Vorschau-qualität, obwohl diese in einer hohen Qualität in einem Speicher eines Videoaufnahmesystems gespeichert sind.

Weiterhin ermöglichen Ausführungsbeispiele, dass nur die Daten übertragen werden müssen, die tatsächlich auch von einem Client (Netzwerkteilnehmer) benötigt werden.

Gemäß weiteren Ausführungsbeispielen kann ein Videoaufnahmesystem entscheiden, welche Qualität überhaupt gesendet werden muss.

Ausführungsbeispiele können ihre Anwendung in der Medienproduktion von Live-Events sowie in der nachträglichen Bearbeitung von Aufzeichnungen mehrerer Kameras einer Veranstaltung finden.

Weitere Ausführungsbeispiele können im Bereich der Raum- und Objektüberwachung eingesetzt werden. Hier kann eine niedrige Vorschauqualität direkt übertragen werden und eine hohe Qualität bei Bedarf angefordert werden.

Weitere Ausführungsbeispiele können ihre Anwendung in der nachträglichen Berechnung neuer Ansichten (virtuelle Kameraposition) bei reduziertem Datenübertragungsaufwand finden.

Es soll noch mal darauf hingewiesen werden, dass obige Videoausnahmesysteme zusätzlich so betreibbar sein können, dass die Echtzeitausgabe des skalierbaren Datenstroms in der nicht herunterskalierten, ungekürzten Version stattfindet, zum Beispiel, wenn das Netzwerkkapazität dies zulässt. Jedenfalls aber besitzt dann das System einen Modus, bei dem die Echtzeitausgabe des skalierbaren Datenstroms in der herunterskalierten Version geschieht. In anderen Worten ausgedrückt, kann die Durchführung der Echtzeitausgabe des skalierbaren Datenstroms nur bei Bedarf in der herunterskalierten Version stattfinden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Bei einem Ausführungsbeispiel des Videoaufnahmesystems kann der Komprimierer 103, 203 ausgebildet sein, um das Bereitstellen des in dem Speicher 107 abgelegten skalierbaren Datenstroms 111 so durchzuführen, dass derselbe ungekürzt in dem Speicher 107 erhalten bleibt.

Bei einem Ausführungsbeispiel des Videoaufnahmesystems kann der Komprimierer 203 ausgebildet sein, um bei Annäherung an eine maximale Speicherkapazität des Speichers 107 den in dem Speicher 107 abgelegten skalierbaren Datenstrom 111 herunterzuskalieren, derart, dass eine Speichergröße des in dem Speicher 107 abgelegten skalierbaren Datenstroms 111 sinkt.

Bei einem Ausführungsbeispiel des Videoaufnahmesystems kann der Komprimierer 203 ausgebildet sein, um bei einem Annähern an die maximale Speicherkapazität des Speichers 107 den skalierbaren Datenstrom 111 in einer speicherangepassten herunterskalierten Version in dem Speicher 107 abzulegen.

Bei einem Ausführungsbeispiel des Videoaufnahmesystems kann der Komprimierer 203 ausgebildet sein, um den skalierbaren Datenstrom 111 mit Metadaten zu versehen, wobei die Metadaten einen Aufnahmezeitpunkt, einen Aufnahmeort und/oder eine Information über den Erfasser 201 der Videosequenz 109 enthalten.

Bei einem Ausführungsbeispiel des Videoaufnahmesystems kann der Komprimierer 103, 203 derart ausgebildet sein, dass der skalierbare Datenstrom 111 durch einfaches Weglassen von Abschnitten des skalierbaren Datenstroms 111 ohne Transkodierung herunterskalierbar ist.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Videoaufnahmesystem (100, 200a, 200b) mit:
einem Erfasser (101, 201) zum Aufnehmen einer Videosequenz (109);
einem Speicher (107);
einem Komprimierer (103, 203) zum
Durchführen einer Videokomprimierung an der Videosequenz (109), um einen qualitäts- und/oder auflösungsskalierbaren Datenstrom (111) zu erhalten, der die Videosequenz (109) repräsentiert; wobei der Komprimierer (103, 203) derart ausgebildet ist, dass der qualitäts- und/oder auflösungsskalierbare Datenstrom (111) durch einfaches Weglassen von Abschnitten des qualitäts- und/oder auflösungsskalierbare Datenstroms (111) ohne Transkodierung herunter-skalierbar ist;
Durchführen einer Echtzeitausgabe des qualitäts- und/oder auflösungsskalierbaren Datenstroms in einer herunterskalierten Version (113), wobei in der herunterskalierten Version (113) eine Anzahl von Einzelbildern der Videosequenz (109) beibehalten wird, sodass keine Reduktion der zeitlichen Auflösung durch Weglassen von Einzelbildern der Videosequenz (109) erfolgt;
und
Ablegen eines zu der herunterskalierten Version (113) des qualitäts- und/oder auflösungsskalierbaren Datenstroms (111) fehlenden Teils des qualitäts- und/oder auflösungsskalierbaren Datenstroms in dem Speicher (107), so dass nur der noch nicht zu einem Netzwerkteilnehmer (117) in der Echtzeitausgabe übertragene Teil des qualitäts- und/oder auflösungsskalierbaren Datenstroms (111) in dem Speicher (107) abgelegt wird; und
einer Netzwerkschnittstelle (105, 205), über die der gespeicherte fehlende Teil des Datenstroms von dem Netzwerkteilnehmer (117) abrufbar ist, um zu einem späteren Zeitpunkt auf die Videosequenz (109) in hoher Qualität zuzugreifen.

2. Videoaufnahmesystem (100, 200a, 200b) gemäß Anspruch 1,
wobei der Komprimierer (103, 203) ausgebildet ist, um bei der Durchführung der Echtzeitausgabe eine Skalierungsrate der herunterskalierten Version (113) des qualitäts- und/oder auflösungsskalierbaren Datenstroms (111) und damit eine Qualität der bei der Echtzeitausgabe ausgegebenen Videosequenz in Abhängigkeit von einem an der Netzwerkschnittstelle (105, 205) empfangenen Anforderungssignal (115) einzustellen, in Form von welchem der Netzwerkteilnehmer (117) dem Videoaufnahmesystem (100, 200a, 200b) mitteilt, in welcher Qualität er die von dem Erfasser (101) erfasste Videosequenz (109) erhalten möchte.

3. Videoaufnahmesystem (100, 200a, 200b) gemäß einem der Ansprüche 1 bis 2, wobei der Komprimierer (103, 203) ausgebildet ist, um in Erwiderung eines Anforderungssignals (115') den in dem Speicher (107) abgelegten qualitäts- und/oder auflösungsskalierbaren Datenstrom (111) in Abhängigkeit von dem Anforderungssignal(115') gegenüber der abgelegten weniger herunterskalierten Version herunterskaliert bereitzustellen.

4. Videoaufnahmesystem (100, 200a, 200b) gemäß Anspruch 3,
wobei der Komprimierer (103, 203) ausgebildet ist, um eine Skalierungsrate bei der Herunterskalierung des in dem Speicher (107) abgelegten Datenstroms (111) in Abhängigkeit des an der Netzwerkschnittstelle empfangenen Anforderungssignals (115') zu wählen.

5. Videoaufnahmesystem (100) gemäß einem der Ansprüche 1 bis 4,
ferner aufweisend ein Gehäuse (121), in dem der Erfasser (101), der Komprimierer (103), der Speicher (107) und die Netzwerkschnittstelle (105) angeordnet sind.

6. Videoaufnahmesystem (200a, 200b) gemäß Anspruch 1, wobei der Komprimierer (203) ausgebildet ist, um bei dem Herunterskalieren des qualitäts- und/oder auflösungsskalierbaren Datenstroms (111) für die Echtzeitausgabe eine Qualitäts- und/oder auflösungsskalierung von Einzelbildern der Videosequenz (109) durchzuführen

7. Videoaufnahmesystem (200a, 200b) gemäß einem der Ansprüche 1 bis 6, wobei der Komprimierer (203) ausgebildet ist, um bei der Herunterskalierung des qualitäts- und/oder auflösungsskalierbaren Datenstroms (111) durch Weglassen von Abschnitten des qualitäts- und/oder auflösungsskalierbaren Datenstroms (111) eine Datenrate von Einzelbildern der Videosequenz (109) zu reduzieren.

8. Videoaufnahmesystem (100, 200a) gemäß einem der Ansprüche 1 bis 7, wobei der Komprimierer (103, 203) ausgebildet ist, um eine JPEG2000 oder eine hybride Videokomprimierung an der Videosequenz (109) durchzuführen, um den qualitäts- und/oder auflösungsskalierbaren Datenstrom (111) zu erhalten.

9. Videoaufnahmesystem (100, 200a) gemäß einem der Ansprüche 1 bis 8, wobei der Komprimierer (103, 203) ausgebildet ist, um den qualitäts- und/oder auflösungsskalierbaren Datenstrom (111) in der Echtzeitausgabe in einer ersten herunterskalierten Version einem ersten Netzwerkteilnehmer (204a) bereitzustellen und gleichzeitig in einer zweiten, von der ersten herunterskalierten Version verschiedenen herunterskalierten Version einem zweiten Netzwerkteilnehmer (204b) bereitzustellen.

10. Videoaufnahmesystem (200a, 200b) gemäß einem der Ansprüche 1 bis 9, wobei die Netzwerkschnittstelle (205) ausgebildet ist, um den gespeicherten qualitäts- und/oder auflösungsskalierbaren Datenstrom (111) unter Nutzung eines Ethernet-Protokolls an einen Netzwerkteilnehmer (204a - 204d) zu übertragen.

11. Videoaufnahmesystem (100, 200a, 200b) gemäß einem der Ansprüche 1 bis 10, wobei der Komprimierer (103, 203) ausgebildet ist, um in Erwiderung eines von einem Netzwerkteilnehmer (117) empfangenen Anforderungssignals (115) zur Anforderung einer gegenüber dem Netzwerkteilnehmer (117) bereits übertragenen herunterskalierten Version des qualitäts- und/oder auflösungsskalierbaren Datenstroms (111) weniger herunterskalierten Version des qualitäts- und/oder auflösungsskalierbaren Datenstroms (111) dem Netzwerkteilnehmer (117) den Rest zwischen der bereits an diesen Netzwerkteilnehmer (117) übertragenen Version des qualitäts- und/oder auflösungsskalierbaren Datenstroms (111) und der angeforderten weniger herunterskalierten Version des qualitäts- und/oder auflösungsskalierbaren Datenstroms (111) an der Netzwerkschnittstelle (105, 205) zur Übertragung bereitzustellen.

12. Videoaufnahmesystem (100, 200a, 200b) gemäß Anspruch 1 bis 11, wobei der Komprimierer (103, 203) ausgebildet ist, um in Erwiderung eines von einem Netzwerkteilnehmer (117) empfangenen Anforderungssignals (115) ein erneutes Übertragen von Teilen des qualitäts- und/oder auflösungsskalierbaren Datenstroms (111), welche bereits zu dem Netzwerkteilnehmer (117) übertragen wurden, zu unterlassen.

13. Verfahren (500) zur Videoaufnahme mit folgenden Schritten:
Aufnehmen (501) einer Videosequenz;
Durchführen (502) einer Videokomprimierung an der Videosequenz, um einen qualitäts- und/oder auflösungsskqualitäts- und/oder auflösungsskalierbaren Datenstrom zu erhalten, der die Videosequenz repräsentiert, wobei der qualitäts- und/oder auflösungsskalierbare Datenstrom (111) durch einfaches Weglassen von Abschnitten des qualitäts- und/oder auflösungsskalierbaren Datenstroms (111) ohne Transkodierung herunter-skalierbar ist;
Durchführen einer Echtzeitausgabe des qualitäts- und/oder auflösungsskalierbaren Datenstroms in einer herunterskalierten Version (113), wobei in der herunterskalierten Version (113) eine Anzahl von Einzelbildern der Videosequenz (109) beibehalten wird, sodass keine Reduktion der zeitlichen Auflösung durch Weglassen von Einzelbildern der Videosequenz (109) erfolgt;
und
Ablegen eines zu der herunterskalierten Version (113) des qualitäts- und/oder auflösungsskalierbaren Datenstroms (111) fehlenden Teils des qualitäts- und/oder auflösungsskalierbaren Datenstroms in einen Speicher (107), so dass nur der noch nicht zu einem Netzwerkeilnehmer (117) in der Echtzeitausgabe übertragene Teil des qualitäts- und/oder auflösungsskalierbaren Datenstroms (111) in dem Speicher (107) abgelegt wird und von dem Netzwerkteilnehmer (117) abrufbar ist, um zu einem späteren Zeitpunkt auf die Videosequenz (109) in hoher Qualität zuzugreifen.

14. Computerprogramm zur Ausführung des Verfahrens gemäß Anspruch 13, wenn das Programm auf einem Computer ausgeführt wird.

## Claims

1. Video recording system (100, 200a, 200b) comprising:
a capturer (101, 201) for recording a video sequence (109);
a memory (107);
a compressor (103, 203) for
performing video compression on the video sequence (109) to obtain a quality- and/or resolution-scalable datastream (111) representing the video sequence (109);
the compressor (103, 203) being configured such that the quality- and/or resolution-scalable datastream (111) may be downscaled without any transcoding by simply omitting portions of the quality- and/or resolution-scalable datastream (111);
performing real-time output of the quality- and/or resolution-scalable datastream in a down-scaled version (113), a number of frames of the video sequence (109) being maintained in the down-scaled version (113), so that there will be no reduction in the temporal resolution by omitting frames of the video sequence (109);
and
storing a part of the quality- and/or resolution-scalable datastream, said part being missing as compared to the down-scaled version (113) of the quality- and/or resolution-scalable datastream (111), within the memory (107), so that only that part of the quality- and/or resolution-scalable datastream (111) which has not yet been transmitted, in the real-time output, to a network subscriber (117) is stored within the memory (107); and
a network interface (105, 205) via which the stored missing part of the datastream may be requested by the network subscriber (117) so as to access the video sequence (109) at a later point in time in a high-quality manner.

2. Video recording system (100, 200a, 200b) as claimed in claim 1,
wherein the compressor (103, 203) is configured to adjust, when performing the real-time output, a scaling rate of the down-scaled version (113) of the quality-and/or resolution-scalable datastream (111) and, thus, to set a quality of the video sequence, which is output in the real-time output, as a function of a request signal (115) received at the network interface (105, 205), in the form of which the network subscriber (117) informs the video recording system (100, 200a, 200b) in which quality said network subscriber (117) wants to obtain the video sequence (109) captured by the capturer (101).

3. Video recording system (100, 200a, 200b) as claimed in any of claims 1 to 2,
wherein the compressor (103, 203) is configured to provide, in response to a request signal (115'), the quality- and/or resolution-scalable datastream (111), which is stored within the memory (107), as a function of the request signal (115') in a manner in which it is downscaled as compared to the less down-scaled stored version.

4. Video recording system (100, 200a, 200b) as claimed in claim 3,
wherein the compressor (103, 203) is configured to select a scaling rate when scaling down the datastream (111), which is stored within the memory (107), as a function of the request signal (115') received at the network interface.

5. Video recording system (100) as claimed in any of claims 1 to 4,
further comprising a housing (121) within which the capturer (101), the compressor (103), the memory (107), and the network interface (105) are arranged.

6. Video recording system (200a, 200b) as claimed in claim 1,
wherein the compressor (203) is configured to perform, when scaling down the quality- and/or resolution-scalable datastream (111) for the real-time output, quality- and/or resolution-scaling of frames of the video sequence (109).

7. Video recording system (200a, 200b) as claimed in any of claims 1 to 6,
wherein the compressor (203) is configured to reduce, when scaling down the quality- and/or resolution-scalable datastream (111), a data rate of frames of the video sequence (109) by omitting portions of the quality- and/or resolution-scalable datastream (111).

8. Video recording system (100, 200a) as claimed in any of claims 1 to 7,
wherein the compressor (103, 203) is configured to perform JPEG2000 or hybrid video compression on the video sequence (109) so as to obtain the quality- and/or resolution-scalable datastream (111).

9. Video recording system (100, 200a) as claimed in any of claims 1 to 8,
wherein the compressor (103, 203) is configured to provide quality- and/or resolution-scalable datastream (111) in the real-time output to a first network subscriber (204a) in a first down-scaled version while simultaneously providing it to a second network subscriber (204b) in a second down-scaled version which differs from the first down-scaled version.

10. Video recording system (200a, 200b) as claimed in any of claims 1 to 9,
wherein the network interface (205) is configured to transmit the stored quality-and/or resolution-scalable datastream (111) to a network subscriber (204a to 204d) while using an Ethernet protocol.

11. Video recording system (100, 200a, 200b) as claimed in any of claims 1 to 10, wherein the compressor (103, 203) is configured to provide, in response to a request signal (115), received from the network subscriber (117), for requesting a version of the quality- and/or resolution-scalable datastream (111) which is down-scaled to a lesser degree as compared to a version of the quality- and/or resolution-scalable datastream (111) which has already been transmitted to the network subscriber (117), to said network subscriber (117) the remainder between that version of the quality- and/or resolution-scalable datastream which has already been transmitted to said network subscriber (117) and the requested less down-scaled version of the quality- and/or resolution-scalable datastream (111) at the network interface (105, 205) for transmission.

12. Video recording system (100, 200a, 200b) as claimed in any of claims 1 to 11,
wherein the compressor (103, 203) is configured to refrain, in response to a request signal (115) received from a network subscriber (117), from repeatedly transmitting parts of the quality- and/or resolution-scalable datastream (111) which have already been transmitted to the network subscriber (117).

13. Method (500) for video recording, comprising:
recording (501) of a video sequence;
performing (502) video compression on the video sequence so as to obtain a quality- and/or resolution-quality- and/or resolution-scalable datastream representing the video sequence, the quality- and/or resolution-scalable datastream (111) being down-scalable without any transcoding by simply omitting portions of the quality- and/or resolution-scalable datastream (111);
performing real-time output of the quality- and/or resolution-scalable datastream in a down-scaled version (113), a number of frames of the video sequence (109) being maintained in the down-scaled version (113), so that there will be no reduction in the temporal resolution by omitting frames of the video sequence (109);
and
storing a part of the quality- and/or resolution-scalable datastream, said part being missing as compared to the down-scaled version (113) of the quality- and/or resolution-scalable datastream (111), within a memory (107), so that only that part of the quality- and/or resolution-scalable datastream (111) which has not yet been transmitted, in the real-time output, to a network subscriber (117) is stored within the memory (107) and may be requested by the network subscriber (117) so as to access the video sequence (109) at a later point in time in a high-quality manner.

14. Computer program for performing the method as claimed in claim 13, when the computer program is executed on a computer.

## Revendications

1. Système d'enregistrement vidéo (100, 200a, 200b), avec:
un collecteur (101, 201) destiné à enregistrer une séquence vidéo (109);
une mémoire (107);
un compresseur (103, 203) destiné à
effectuer une compression vidéo sur la séquence vidéo (109), pour obtenir un flux de données échelonnable en qualité et/ou en résolution (111) qui représente la séquence vidéo (109);
le compresseur (103, 203) étant conçu de sorte que le flux de données échelonnable en qualité et/ou en résolution (111) puisse être échelonné vers le bas en omettant simplement des segments du flux de données échelonnable en qualité et/ou en résolution (111), sans transcodage;
effectuer une sortie en temps réel du flux de données échelonnable en qualité et/ou en résolution dans une version échelonnée vers le bas (113), où dans la version échelonnée vers le bas (113) sont maintenues un nombre d'images individuelles de la séquence vidéo (109), de sorte qu'il ne se produise aucune réduction de la résolution temporelle par l'omission d'images individuelles de la séquence vidéo (109); et
déposer dans la mémoire (107) une partie du flux de données échelonnable en qualité et/ou en résolution qui manque par rapport à la version échelonnée vers le bas (113) du flux de données échelonnable en qualité et/ou en résolution (111), de sorte que seule la partie du flux de données échelonnable en qualité et/ou en résolution (111) qui n'a pas encore été transmise à un abonné de réseau (117) dans la sortie en temps réel soit déposée dans la mémoire (107); et
une interface de réseau (105, 205), par laquelle peut être récupérée par l'abonné de réseau (117) la partie manquante mémorisée du flux de données, pour accéder à un moment ultérieur à la séquence vidéo (109) en haute qualité.

2. Système d'enregistrement vidéo (100, 200a, 200b) selon la revendication 1,
dans lequel le compresseur (103, 203) est conçu pour établir, lors de la réalisation de la sortie en temps réel, un taux d'échelonnement de la version échelonnée vers le bas (113) du flux de données échelonnable en qualité et/ ou en résolution (111) et, de ce fait, une qualité de la séquence vidéo sortie lors de la sortie en temps réel en fonction d'un signal de demande (115) reçu à l'interface de réseau (105, 205), sous forme duquel l'abonné de réseau (117) communique au système d'enregistrement vidéo ( 100, 200a, 200b) la qualité dans laquelle il désire recevoir la séquence vidéo (109) collectée par le collecteur (101).

3. Système d'enregistrement vidéo (100, 200a, 200b) selon l'une des revendications 1 à 2,
dans lequel le compresseur (103, 203) est conçu pour mettre à disposition, en réponse à un signal de demande (115'), le flux de données échelonnable en qualité et/ou en résolution (111) déposé dans la mémoire (107), en fonction du signal de demande (115') et. de manière échelonnée vers le bas par rapport à la version déposée moins échelonnée vers le bas.

4. Système d'enregistrement vidéo (100, 200a, 200b) selon la revendication 3,
dans lequel le compresseur (103, 203) est conçu pour sélectionneur un taux d'échelonnement lors de l'échelonnement vers le bas du flux de données (111) déposé dans la mémoire (107), en fonction du signal de demande (115') reçu à l'interface de réseau.

5. Système d'enregistrement vidéo (100) selon l'une des revendications 1 à 4,
présentant par ailleurs un boîtier (121) dans lequel sont disposés le collecteur (101), le compresseur (103), la mémoire (107) et l'interface de réseau (105).

6. Système d'enregistrement vidéo (200a, 200b) selon la revendication 1,
dans lequel le compresseur (203) est conçu pour effectuer, lors de l'échelonnement vers le bas du flux de données échelonnable en qualité et/ ou en résolution (111) pour la sortie en temps réel, un échelonnement en qualité et/ou en résolution d'images individuelles de la séquence vidéo (109).

7. Système d'enregistrement vidéo (200a, 200b) selon l'une des revendications 1 à 6,
dans lequel le compresseur (203) est conçu pour réduire, lors de l'échelonnement vers le bas du flux de données échelonnable en qualité et/ou en résolution (111) par omission de segments du flux de données échelonnable en qualité et/ou en résolution (111), un taux de données d'images individuelles de la séquence vidéo (109).

8. Système d'enregistrement vidéo (100, 200a) selon l'une des revendications 1 à 7,
dans lequel le compresseur (103, 203) est conçu pour effectuer une compression JPEG2000 ou une compression vidéo hybride sur la séquence vidéo (109) pour obtenir le flux de données échelonnable en qualité et/ ou en résolution (111).

9. Système d'enregistrement vidéo (100, 200a) selon l'une des revendications 1 à 8,
dans lequel le compresseur (103, 203) est conçu pour mettre le flux de données échelonnable en qualité et/ ou en résolution (111) dans la sortie en temps réel dans une première version échelonnée vers le bas à disposition d'un premier abonné de réseau (204a) et simultanément pour le mettre, dans une deuxième version échelonnée vers le bas différente de la première version échelonnée vers le bas, à disposition d'un deuxième abonné de réseau (204b).

10. Système d'enregistrement vidéo (200a, 200b) selon l'une des revendications 1 à 9,
dans lequel l'interface de réseau (205) est conçue pour transmettre le flux de données échelonnable en qualité et/ou en résolution (111) mémorisé à un abonné de réseau (204a à 204d) en utilisant un protocole Ethernet.

11. Système d'enregistrement vidéo (100, 200a, 200b) selon l'une des revendications 1 à 10,
dans lequel le compresseur (103, 203) est conçu pour, en réponse à un signal de demande (115) reçu d'un abonné de réseau (117) pour demander une version moins échelonnée vers le bas du flux de données échelonnable en qualité et/ou en résolution (111) par rapport à la version échelonnée vers le bas du flux de données échelonnable en qualité et/ou en résolution (111) déjà transmise à l'abonné de réseau (117), mettre à disposition de l'abonné de réseau (117) le reste entre la version du flux de données échelonnable en qualité et/ou en résolution. (111) déjà transmise à cet abonné de réseau (117) et la aversion moins échelonnée vers le bas demandée du flux de données échelonnable en qualité et/ou en résolution (111) à l'interface de réseau (105, 205) pour transmission.

12. Système d'enregistrement vidéo (100, 200a, 200b) selon les revendications 1 à 11,
dans lequel le compresseur (103, 203) est conçu pour omettre, en réponse à un signal de demande (115) reçu d'un abonné de réseau (117), une nouvelle transmission de parties du flux de données échelonnable en qualité et/ou en résolution (111) qui ont déjà été transmises à l'abonné de réseau (117).

13. Procédé (500) d'enregistrement vidéo, aux étapes suivantes consistant à:
enregistrer (501) une séquence vidéo;
effectuer (502) une compression vidéo sur la séquence vidéo, pour obtenir un flux de données échelonnable en qualité et/ou en qualité de résolution et/ou en résolution qui représente la séquence vidéo, où le flux de données échelonnable en qualité et/ ou en résolution (111) peut être échelonné vers le bas en omettant simplement des segments du flux de données échelonnable en qualité et/ou en résolution (111), sans transcodage;
effectuer une sortie en temps réel du flux de données échelonnable en qualité et/ou en résolution dans une version échelonnée vers le bas (113), où dans la version échelonnée vers le bas (113) sont maintenues un nombre d'images individuelles de la séquence vidéo (109), de sorte qu'il ne se produise aucune réduction de la résolution temporelle par l'omission d'images individuelles de la séquence vidéo (109); et
déposer dans une mémoire (107) une partie du flux de données échelonnable en qualité et/ou en résolution qui manque par rapport à la version échelonnée vers le bas (113) du flux de données échelonnable en qualité et/ou en résolution (111), de sorte que seule la partie du flux de données échelonnable en qualité et/ ou en résolution (111) qui n'a pas encore été transmise à un abonné de réseau (117) dans la sortie en temps réel soit déposée dans la mémoire (107) et puisse être récupérée par l'abonné de réseau (117), pour accéder à un moment ultérieur à la séquence vidéo (109) en haute qualité.

14. Programme d'ordinateur pour la mise en oeuvre du procédé selon la revendication 13 lorsque le programme est exécuté sur un ordinateur.
